(19) Europäisches Patentamt
European Patent Office
Office européen des brevets

(11) **EP 4 664 414 A1**

(12) **EUROPEAN PATENT APPLICATION**
published in accordance with Art. 153(4) EPC

(43) Date of publication:
**17.12.2025 Bulletin 2025/51**

(21) Application number: 24763127.8

(22) Date of filing: **27.02.2024**

(51) International Patent Classification (IPC):
**G06V 10/77** *(2022.01)*   **G06V 10/774** *(2022.01)*
**G06V 10/80** *(2022.01)*   **G06V 10/764** *(2022.01)*

(52) Cooperative Patent Classification (CPC):
Y02T 10/40

(86) International application number:
**PCT/CN2024/078728**

(87) International publication number:
**WO 2024/179446 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2023 CN 202310216763**

(71) Applicant: **Huawei Technologies Co., Ltd.**
**Shenzhen, Guangdong 518129 (CN)**

(72) Inventors:
• **YANG, Hao**
**Shenzhen, Guangdong 518129 (CN)**
• **HONG, Lanqing**
**Shenzhen, Guangdong 518129 (CN)**
• **LI, Aoxue**
**Shenzhen, Guangdong 518129 (CN)**
• **HU, Tianyang**
**Shenzhen, Guangdong 518129 (CN)**
• **LI, Zhenguo**
**Shenzhen, Guangdong 518129 (CN)**
• **WANG, Liwei**
**Beijing 100871 (CN)**

(74) Representative: **Epping - Hermann - Fischer Patentanwaltsgesellschaft mbH**
**Schloßschmidstraße 5**
**80639 München (DE)**

(54) **IMAGE PROCESSING METHOD AND RELATED DEVICE**

(57)    An image processing method and a related device are disclosed. The method may be applied to a three-dimensional scene in the artificial intelligence field. The method includes: inputting a training sample to a first model to obtain feature information of each image in the training sample, and training the first model. The training sample includes images of a first scene at a plurality of angles of view, including a first image and a second image. An objective of training includes increasing a similarity between first feature information and second feature information, where the first feature information includes feature information of a first point in the first image, the second feature information includes feature information of a second point in the second image, and the first point and the second point correspond to a same point in the first scene. During feature extraction by using a trained first model, feature information, in images at different angles of view, of a same point in a scene is more similar. The feature information can indicate a relationship between images at different angles of view. This helps enhance a geometric perception capability of the model.

Obtain a training sample, where a plurality of images in the training sample include images of a first scene at a plurality of angles of view — 301

Input the training sample to a first model, and perform feature extraction by using the first model to obtain feature information of each image in the training sample — 302

Train the first model based on the feature information of each image in the training sample and a first loss term, where the plurality of images include a first image and a second image, an objective of training by using the first loss term includes increasing a similarity between first feature information and second feature information, the first feature information includes feature information of a first point in the first image, the second feature information includes feature information of a second point in the second image, and the first point in the first image and the second point in the second image correspond to a same point in the first scene — 303

FIG. 3

## Description

This application claims priority to Chinese Patent Application No. 202310216763.9, filed with the China National Intellectual Property Administration on February 27, 2023, and entitled "IMAGE PROCESSING METHOD AND RELATED DEVICE", which is incorporated herein by reference in its entirety.

## TECHNICAL FIELD

This application relates to the artificial intelligence field, and in particular, to an image processing method and a related device.

## BACKGROUND

Artificial intelligence (Artificial Intelligence, AI) is a theory, a method, a technology, and an application system in which human intelligence is simulated, extended, and expanded by using a digital computer or a machine controlled by a digital computer, to perceive an environment, obtain knowledge, and achieve an optimal result by using the knowledge. In other words, the artificial intelligence is a branch of computer science and is intended to understand essence of intelligence and produce a new intelligent machine that can react in a manner similar to human intelligence. The artificial intelligence is to study design principles and implementation methods of various intelligent machines, so that the machines have perception, inference, and decision-making functions.

In recent years, performing various image processing tasks, such as three-dimensional (3-dimensional, 3D) scene reconstruction, 3D image classification, object detection on a 3D image, semantic segmentation on a 3D image, or other image processing tasks, in a 3D scene by using an artificial intelligence technology is a common application mode of the artificial intelligence.

Specifically, a plurality of images of a same scene at a plurality of angles of view may be obtained, and each of the plurality of images is an image of the scene at one angle of view. The plurality of images are input to a model, and feature extraction is performed on an image at each angle of view by using the model, to obtain feature information of each image. Then a prediction result corresponding to an image processing task is generated based on the feature information of each image.

However, because the model separately performs feature extraction on the image at each angle of view without learning a relationship between images at different angles of view, a feature extraction solution capable of obtaining more information urgently needs to be proposed.

## SUMMARY

Embodiments of this application provide an image processing method and a related device. An objective of training includes increasing a similarity between feature information, in images at different angles of view, of a same point in a first scene. In the foregoing solution, when feature extraction is performed on images of a same scene at different angles of view by using a trained first model, feature information, in images at different angles of view, of a same point in the scene is more similar. In this case, feature information obtained by using the first model can indicate a relationship between images at different angles of view. This helps obtain more abundant information in a feature extraction stage. In addition, the model can integrate information at a plurality of angles of view. This also helps enhance a geometric perception capability of the model. To resolve the foregoing technical problem, embodiments of this application provide the following technical solutions.

According to a first aspect, an embodiment of this application provides a model training method. The method may be applied to a three-dimensional scene in the artificial intelligence field. The method includes: A training device obtains a training sample, where a plurality of images in the training sample include images of a first scene at a plurality of angles of view. For example, the first scene may be an environment, a person, an animal, an object, or a first scene of another type. For example, the "environment" may be a traffic road environment, an indoor environment, a park environment, or an environment of another type; the "person" may be a virtual person or a physical person; and the "animal" may be a virtual animal or a physical animal. This is not limited herein. The training device inputs the training sample to a first model, performs feature extraction by using the first model to obtain feature information of each image in the training sample, and trains the first model based on the feature information of each image in the training sample and a first loss term. The plurality of images include a first image and a second image. An objective of training by using the first loss term includes increasing a similarity between first feature information and second feature information, where the first feature information includes feature information of a first point in the first image, the second feature information includes feature information of a second point in the second image, and the first point in the first image and the second point in the second image correspond to a same point in the first scene. In other words, the first point in the first image and the second point in the second image can be separately obtained by projecting a same point in the three-dimensional first scene to images at different angles of view. That is, the objective of training by using the first loss term includes increasing a similarity between feature information of points with same semantics in images at different angles of view.

In this implementation, because the first loss term is used during training, the objective of training the first model by using the first loss term includes increasing the similarity between the first feature information and the second feature information, where the first feature information includes the feature information of the first point in the first image, the second feature information includes the feature information of the second point in the second image, and the first point in the first image and the second point in the second image correspond to a same point in the first scene. That is, the objective of training includes increasing a similarity between feature information, in images at different angles of view, of a same point in the first scene. In the foregoing solution, when feature extraction is performed on images of a same scene at different angles of view by using a trained first model, feature information, in images at different angles of view, of a same point in the scene is more similar. In this case, feature information obtained by using the first model can indicate a relationship between images at different angles of view. This helps obtain more abundant information in a feature extraction stage. In addition, the model can integrate information at a plurality of angles of view. This also helps enhance a geometric perception capability of the model.

In a possible implementation, that the training device trains the first model based on the feature information of each image in the training sample and the first loss term includes: The training device trains the first model based on the feature information of each image in the training sample, the first loss term, and a second loss term, where an objective of training by using the second loss term includes reducing a similarity between the first feature information and third feature information, the third feature information includes feature information of a third point in the second image, and the third point is different from the second point.

In this implementation, the first point in the first image and the second point in the second image correspond to a same point in the first scene, and the third point is different from the second point. In other words, the third point and the first point correspond to different points in the first scene. The objective of training by using the second loss term includes reducing the similarity between the first feature information of the first point and the third feature information of the third point. To be specific, feature information, in images at different angles of view, of a same point in the first scene is more similar; and feature information, in images at different angles of view, of different points in the first scene is more dissimilar. In this case, feature information obtained by using the first model can indicate more relationships between images at different angles of view. This helps further enhance a geometric perception capability of the model, to improve accuracy of a prediction result output by the first model.

In a possible implementation, both the second point and the third point are located on a first line, a second line is projected to the second image to obtain the first line, the second line passes through the first point, and the second line further passes through a focus of a camera that captures the first image and/or an origin of a camera coordinate system corresponding to the first image. In this embodiment of this application, after the first point is determined, the second line can be obtained, and the first line in the second image can be determined by projecting the second line to an image at another angle of view (that is, the second image). A point having same semantics as the first point is usually located on the first line. The third point is sampled from the first line. This helps the first model obtain, through learning, points in the image at the another angle of view that are consistent with points in the first scene corresponding to the first point, and points in the image at the another angle of view that are inconsistent with points in the first scene corresponding to the first point. This helps further improve accuracy of a prediction result output by the first model.

In a possible implementation, the feature information of each image in the training sample includes updated feature information of a plurality of first pixels of each image in the training sample; and that the training device performs feature extraction by using the first model to obtain the feature information of each image in the training sample includes: The training device obtains initial feature information of a second pixel, where the first pixel and the second pixel are points in different images among the plurality of images, and the first pixel and the second pixel have same semantics. The training device performs fusion on initial feature information of the first pixel and the initial feature information of the second pixel to obtain updated feature information of the first pixel. Optionally, the feature information of each image in the training sample may further include initial feature information of a fourth pixel in each image, and the fourth pixel and the first pixel are different pixels in a same image.

In this implementation, in the feature extraction stage of the first model, after initial feature information of a first pixel in an image of the first scene at a specific angle of view is obtained, feature information of a second pixel may be obtained from an image of the first scene at another angle of view, where the first pixel and the second pixel have same semantics. Fusion is performed on initial feature information of the second pixel and initial feature information of the first pixel to obtain updated feature information of the first pixel. To be specific, updated feature information, included in the feature information of each image in the training sample, of the first pixel is obtained. In the foregoing manner, the updated feature information of the first pixel includes feature information, at a plurality of angles of view, of a specific point in space. In this case, the feature information of each image can indicate a geometric constraint between images at different angles of view. This helps obtain more abundant information, to improve accuracy of a prediction result output by the first model.

In a possible implementation, the first pixel is included in a third image in the training sample, and that the training device obtains the initial feature information of the second pixel includes: The training device obtains at least one third point on a third line, where the third line passes through the first pixel, and the third line further passes through a focus of a camera that captures the third image and/or an origin of an image coordinate system corresponding to the third image. The training device obtains a feature information set, where the feature information set includes initial feature information of each of a plurality of projected-to points, the projected-to point is a point obtained by projecting the third point to a fourth image, the fourth image is an image in the training sample other than the third image, and the plurality of projected-to points include the second pixel. That is, the feature information set includes the initial feature information of the second pixel. That the training device performs fusion on the initial feature information of the first pixel and the initial feature information of the second pixel includes: The training device performs fusion on the initial feature information of the first pixel and the feature information set. In this implementation, a simple solution for obtaining the initial feature information of the second pixel is provided, to reduce implementation difficulty of this solution while ensuring that the initial feature information of the second pixel can be accurately obtained.

In a possible implementation, the training sample further includes a new angle of view, and after the training device performs feature extraction by using the first model to obtain the feature information of each image in the training sample, the method further includes: The training device performs feature processing based on the feature information of each image in the training sample by using the first model to obtain a predicted image of the first scene at the new angle of view. That the training device trains the first model based on the feature information of each image in the training sample and the first loss term includes: The training device trains the first model based on the feature information of each image in the training sample, the predicted image, the first loss term, and a third loss term, where the third loss term indicates a similarity between the predicted image and an expected image of the first scene at the new angle of view. In this implementation, a specific application scenario of this solution is provided, to increase a degree of combination between this solution and an actual application scenario, and reduce implementation difficulty of this solution.

In a possible implementation, the predicted image includes first color values of a plurality of pixels, and that the training device performs feature processing by using the first model to obtain the predicted image of the first scene at the new angle of view includes: The training device performs feature processing by using the first model to obtain information that is generated by the first model and that corresponds to a third pixel, where the third pixel is any one of the plurality of pixels, and the information corresponding to the third pixel includes a plurality of second color values and a voxel density corresponding to each second color value. For example, the information corresponding to the third pixel includes second color values and voxel densities of a plurality of sampling points, all of the plurality of sampling points corresponding to the third pixel are located on a fourth line, and the fourth line uses an origin of a camera coordinate system corresponding to the predicted image as a starting point and passes through the third pixel. The training device normalizes the voxel density corresponding to each second color value to obtain a weight of each second color value, and performs weighted summation on the plurality of second color values based on the weight of each second color value to obtain a first color value of the third pixel. For example, the training device normalizes a voxel density corresponding to each sampling point to obtain a weight of a second color value of the sampling point.

In this implementation, the voxel density corresponding to each second color value is normalized to obtain the weight of each second color value, and then weighted summation is performed on the plurality of second color values based on the weight of each second color value to obtain the first color value of the third pixel. In the foregoing solution, a solution for obtaining a color value of a pixel in a predicted image is provided, and the foregoing solution is simple and convenient.

According to a second aspect, an embodiment of this application provides a model training method. The method may be applied to a three-dimensional scene in the artificial intelligence field. The method includes: An execution device obtains to-be-processed data, where a plurality of images in the to-be-processed data include images of a scene at a plurality of angles of view; inputs the to-be-processed data to a first model, and performs feature extraction by using the first model to obtain feature information of each image in the to-be-processed data; and performs feature processing based on the feature information of each image in the to-be-processed data by using the first model to obtain a prediction result output by the first model.

The first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

In a possible implementation, the first model is obtained through training based on the training sample, the first loss term, and a second loss term, an objective of training by using the second loss term includes reducing a similarity between the first feature information and third feature information, the third feature information includes feature information of a first pixel in the second image, and the first pixel is different from the second point.

In a possible implementation, the feature information of each image in the to-be-processed data includes feature information of a plurality of first pixels of each image in the to-be-processed data, and that the execution device performs feature extraction by using the first model to obtain the feature information of each image in the to-be-processed data includes: The execution device obtains initial feature information of a second pixel, where the first pixel and the second pixel are points in different images in the to-be-processed data packet, and the first pixel and the second pixel have same semantics; and performs fusion on initial feature information of the first pixel and the initial feature information of the second pixel to obtain feature information of the first pixel.

In the second aspect of this application, the execution device may be further configured to perform the steps performed by the training device in the first aspect and the possible implementations of the first aspect. For specific implementations of the steps, meanings of nouns, and beneficial effect achieved in the possible implementations of the second aspect, refer to the first aspect. Details are not described herein again.

According to a third aspect, an embodiment of this application provides a model training method. The method may be applied to a three-dimensional scene in the artificial intelligence field. The method includes: An execution device obtains to-be-processed data, where a plurality of images in the to-be-processed data include images of a scene at a plurality of angles of view; inputs the to-be-processed data to a first model, and performs feature extraction by using the first model to obtain feature information of each image in the to-be-processed data; and performs feature processing based on the feature information of each image in the to-be-processed data by using the first model to obtain a prediction result output by the first model.

The feature information of each image in the to-be-processed data includes feature information of a plurality of first pixels of each image in the to-be-processed data, and performing feature extraction by using the first model to obtain the feature information of each image in the to-be-processed data includes: obtaining initial feature information of a second pixel, where the first pixel and the second pixel are points in different images in the to-be-processed data packet, and the first pixel and the second pixel have same semantics; and performing fusion on initial feature information of the first pixel and the initial feature information of the second pixel to obtain feature information of the first pixel.

In a possible implementation, the first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

In a possible implementation, the first model is obtained through training based on the training sample, the first loss term, and a second loss term, an objective of training by using the second loss term includes reducing a similarity between the first feature information and third feature information, the third feature information includes feature information of a first pixel in the second image, and the first pixel is different from the second point.

In a possible implementation, both the second point and the third point are located on a first line, a second line is projected to the second image to obtain the first line, the second line passes through the first point, and the second line further passes through a focus of a camera that captures the first image and/or an origin of a camera coordinate system corresponding to the first image.

In a possible implementation, the first pixel is included in a third image in the to-be-processed data, and that the execution device obtains the initial feature information of the second pixel includes: The execution device obtains at least one third point on a third line, where the third line passes through the first pixel, and the third line further passes through a focus of a camera that captures the third image and/or an origin of an image coordinate system corresponding to the third image. The execution device obtains a feature information set, where the feature information set includes initial feature information of each of a plurality of projected-to points, the projected-to point is a point obtained by projecting the third point to a fourth image, the fourth image is an image in the to-be-processed data other than the third image, and the plurality of projected-to points include the second pixel. That the execution device performs fusion on the initial feature information of the first pixel and the initial feature information of the second pixel includes: performing fusion on the initial feature information of the first pixel and the feature information set.

In a possible implementation, the to-be-processed data further includes a new angle of view, and after the execution device performs feature extraction by using the first model to obtain the feature information of each image in the to-be-processed data, the method further includes: The execution device performs feature processing based on the feature information of each image in the to-be-processed data by using the first model to obtain a predicted image of the first scene at the new angle of view.

In a possible implementation, the predicted image includes first color values of a plurality of pixels, and that the execution device performs feature processing by using the first model to obtain the predicted image of the first scene at the new angle of view includes: The execution device performs feature processing by using the first model to obtain information that is generated by the first model and that corresponds to a third pixel, where the third pixel is any one of the plurality of pixels, and the information corresponding to the third pixel includes a plurality of second color values and a voxel density corresponding to each second color value. The execution device normalizes the voxel density corresponding to each second color value to obtain a weight of each second color value, and performs weighted summation on the plurality of second color values based on the weight of each second color value to obtain a first color value of the third pixel.

For specific implementations of the steps, meanings of nouns, and beneficial effect achieved in the possible implementations of the third aspect, refer to the first aspect. Details are not described herein again.

According to a fourth aspect, an embodiment of this application provides a model training apparatus. The model training apparatus may be used in a three-dimensional scene in the artificial intelligence field. The model training apparatus includes: an obtaining module, configured to obtain a training sample, where a plurality of images in the training sample include images of a first scene at a plurality of angles of view; a processing module, configured to input the training sample to a first model, and perform feature extraction by using the first model to obtain feature information of each image in the training sample; and a training module, configured to train the first model based on the feature information of each image in the training sample and a first loss term.

The plurality of images include a first image and a second image. An objective of training by using the first loss term includes increasing a similarity between first feature information and second feature information. The first feature information includes feature information of a first point in the first image. The second feature information includes feature information of a second point in the second image. The first point in the first image and the second point in the second image correspond to a same point in the first scene.

In the fourth aspect of this application, the model training apparatus may be further configured to perform the steps performed by the training device in the first aspect and the possible implementations of the first aspect. For specific implementations of the steps, meanings of nouns, and beneficial effect achieved in the possible implementations of the fourth aspect, refer to the first aspect. Details are not described herein again.

According to a fifth aspect, an embodiment of this application provides an image processing apparatus. The image processing apparatus may be used in a three-dimensional scene in the artificial intelligence field. The image processing apparatus includes: an obtaining module, configured to obtain to-be-processed data, where a plurality of images in the to-be-processed data include images of a scene at a plurality of angles of view; and a processing module, configured to input the to-be-processed data to a first model, and perform feature extraction by using the first model to obtain feature information of each image in the to-be-processed data. The processing module is further configured to perform feature processing based on the feature information of each image in the to-be-processed data by using the first model to obtain a prediction result output by the first model.

The first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

In the fifth aspect of this application, the image processing apparatus may be further configured to perform the steps performed by the execution device in the second aspect and the possible implementations of the second aspect. For specific implementations of the steps, meanings of nouns, and beneficial effect achieved in the possible implementations of the fifth aspect, refer to the second aspect. Details are not described herein again.

According to a sixth aspect, an embodiment of this application provides an image processing apparatus. The image processing apparatus may be used in a three-dimensional scene in the artificial intelligence field. The image processing apparatus includes: an obtaining module, configured to obtain to-be-processed data, where a plurality of images in the to-be-processed data include images of a scene at a plurality of angles of view; and a processing module, configured to input the to-be-processed data to a first model, and perform feature extraction by using the first model to obtain feature information of each image in the to-be-processed data. The processing module is further configured to perform feature processing based on the feature information of each image in the to-be-processed data by using the first model to obtain a prediction result output by the first model.

The feature information of each image in the to-be-processed data includes feature information of a plurality of first pixels of each image in the to-be-processed data, and the processing module is specifically configured to obtain initial feature information of a second pixel, and perform fusion on initial feature information of the first pixel and the initial feature information of the second pixel to obtain feature information of the first pixel, where the first pixel and the second pixel are points in different images in the to-be-processed data packet, and the first pixel and the second pixel have same semantics.

In the sixth aspect of this application, the image processing apparatus may be further configured to perform the steps performed by the execution device in the third aspect and the possible implementations of the third aspect. For specific implementations of the steps, meanings of nouns, and beneficial effect achieved in the possible implementations of the sixth aspect, refer to the third aspect. Details are not described herein again.

According to a seventh aspect, an embodiment of this application provides a computer program product. The computer program product includes a program. When the program is run on a computer, the computer is enabled to perform the method according to the first aspect, the second aspect, or the third aspect.

According to an eighth aspect, an embodiment of this application provides a computer-readable storage medium. The computer-readable storage medium stores a computer program. When the computer program is run on a computer, the computer is enabled to perform the method according to the first aspect, the second aspect, or the third aspect.

According to a ninth aspect, an embodiment of this application provides an execution device, including a processor and a memory. The processor is coupled to the memory. The memory is configured to store a program. The processor is configured to execute the program in the memory, to enable the execution device to perform the image processing method according to the second aspect or the third aspect.

According to a tenth aspect, an embodiment of this application provides a training device, including a processor and a memory. The processor is coupled to the memory. The memory is configured to store a program. The processor is configured to execute the program in the memory, to enable the training device to perform the model training method according to the first aspect.

According to an eleventh aspect, this application provides a chip system. The chip system includes a processor, configured to support a terminal device or a communication device in implementing the functions in the foregoing aspects, for example, sending or processing data and/or information in the foregoing methods. In a possible design, the chip system further includes a memory. The memory is configured to store program instructions and data that are necessary for the terminal device or the communication device. The chip system may include a chip, or may include a chip and another discrete component.

## BRIEF DESCRIPTION OF DRAWINGS

FIG. 1a is a diagram of a structure of a main framework of artificial intelligence according to an embodiment of this application;

FIG. 1b is a diagram of a scenario in which three-dimensional reconstruction needs to be performed according to an embodiment of this application;

FIG. 2 is a diagram of a system architecture of an image processing system according to an embodiment of this application;

FIG. 3 is a schematic flowchart of a model training method according to an embodiment of this application;

FIG. 4 is a diagram of a first point and a second point according to an embodiment of this application;

FIG. 5 is another schematic flowchart of a model training method according to an embodiment of this application;

FIG. 6 is a diagram of a plurality of projected-to points according to this application;

FIG. 7 is another diagram of a plurality of projected-to points according to this application;

FIG. 8 is a diagram of a fourth line according to an embodiment of this application;

FIG. 9 is a diagram of a first point, a second point, and a third point according to an embodiment of this application;

FIG. 10 is a diagram of a calculation process of a loss function according to an embodiment of this application;

FIG. 11 is a schematic flowchart of an image processing method according to an embodiment of this application;

FIG. 12 is a diagram of a structure of a model training apparatus according to an embodiment of this application;

FIG. 13 is a diagram of a structure of an image processing apparatus according to an embodiment of this application;

FIG. 14 is a diagram of a structure of an image processing apparatus according to an embodiment of this application;

FIG. 15 is a diagram of a structure of an execution device according to an embodiment of this application;

FIG. 16 is a diagram of a structure of a training device according to an embodiment of this application; and

FIG. 17 is a diagram of a structure of a chip according to an embodiment of this application.

## DESCRIPTION OF EMBODIMENTS

The following describes embodiments of this application with reference to the accompanying drawings. A person of ordinary skill in the art can know that the technical solutions provided in embodiments of this application are also applicable to similar technical problems with development of technologies and emergence of new scenarios.

In the specification, claims, and accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, method, system, product, or device that includes a list of units is not necessarily limited to those units, but may include other units that are not expressly listed or are inherent to the process, method, product, or device.

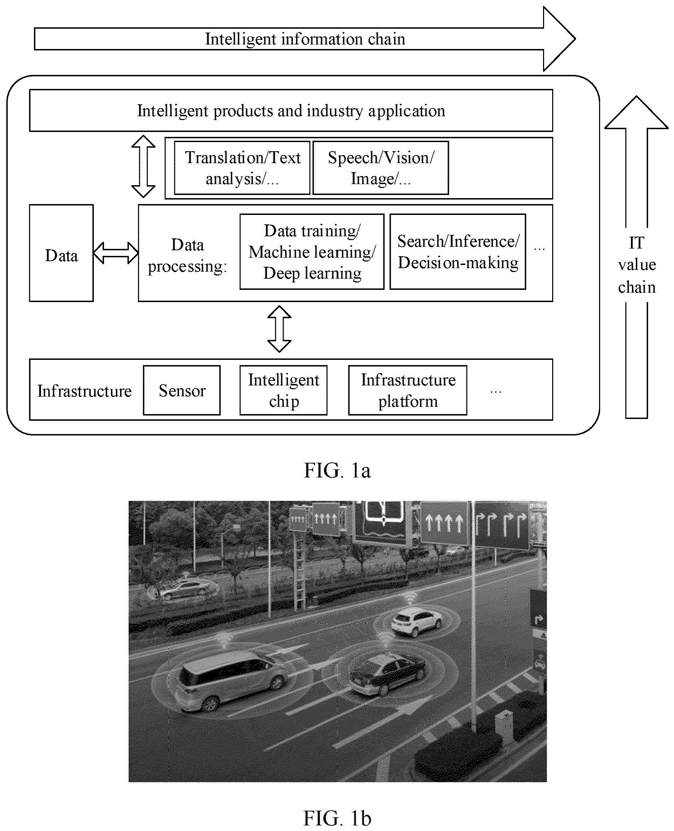

First, an overall operation process of an artificial intelligence system is described. FIG. 1a is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

(1) Infrastructure

The infrastructure provides computing capability support for the artificial intelligence system, implements communication with the outside world, and implements support through an infrastructure platform. The infrastructure communicates with the outside through a sensor. A computing capability is provided by an intelligent chip. The intelligent chip may be specifically a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The infrastructure platform includes related platform assurance and support such as a distributed computing framework and a network, and may include cloud storage and computing, an interconnection and interworking network, and the like. For example, the sensor communicates with the outside to obtain data, and the data is provided for an intelligent chip in a distributed computing system provided by the infrastructure platform to perform computing.

(2) Data

Data at an upper layer of the infrastructure indicates a data source in the artificial intelligence field. The data relates to graphics, images, speech, and text, and further relates to internet of things data of conventional devices, including service data of an existing system and perception data such as force, displacement, a liquid level, temperature, and humidity.

(3) Data processing

The data processing usually includes data training, machine learning, deep learning, search, inference, decision-making, and the like.
The machine learning and the deep learning may be used for performing symbolic and formal intelligent information modeling, extraction, preprocessing, training, and the like on data.
The inference is a process of performing machine thinking and solving problems by simulating an intelligent inference mode of humans in a computer or intelligent system by using formal information and according to an inference control policy. A typical function is search and matching. The decision-making is a process of making a decision after intelligent information is inferred, and usually provides classification, sorting, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent manufacturing, intelligent transportation, smart household, intelligent healthcare, intelligent security protection, autonomous driving, smart city, and the like.
This application may be applied to various application fields of artificial intelligence technologies, and is specifically used to process images in 3D scenes in the application fields. The following describes a plurality of example application scenarios of this application.

Application scenario 1: generating an image at a new angle of view

An electronic device may obtain an image set corresponding to a same scene. A plurality of images in the image set include images of the scene at a plurality of known angles of view. The electronic device obtains an image at a new angle of view through synthesis based on the images of the scene at the plurality of known angles of view, to implement three-dimensional reconstruction of the scene.

For example, in the field of intelligent terminals, three-dimensional reconstruction needs to be performed on a 3D virtual digital human (this is an example of the foregoing scene). To improve quality of a reconstructed 3D virtual digital human, images of the 3D virtual digital human at a plurality of new angles of view may be generated based on images of the 3D virtual digital human at a plurality of known angles of view, and then three-dimensional reconstruction is performed on the 3D virtual digital human.

For another example, in the field of autonomous driving, three-dimensional reconstruction needs to be performed on a surrounding environment of a vehicle. Images of the surrounding environment of the vehicle at a plurality of new angles of view may be generated based on images of the environment around the vehicle at a plurality of known angles of view, and then three-dimensional reconstruction is performed on the surrounding environment of the vehicle.

For more intuitive understanding of this solution, refer to FIG. 1b. FIG. 1b is a diagram of a scenario in which three-dimensional reconstruction needs to be performed according to an embodiment of this application. FIG. 1b shows a surrounding environment, on which three-dimensional reconstruction needs to be performed, of a vehicle. It should be understood that the example in FIG. 1b is merely intended for ease of understanding this solution, but not to limit this solution.

Application scenario 2: image classification

For example, after obtaining a 3D image of a scene, an electronic device may obtain images of the scene at a plurality of angles of view from the 3D image of the scene, and classify objects in the scene based on the images of the scene at the plurality of angles of view.

Application scenario 3: object detection

For example, in the field of autonomous driving, an autonomous vehicle may capture images of a surrounding environment of the vehicle (this is an example of the "same scene") at a plurality of angles of view through a sensor, and perform object detection based on the captured images at the plurality of angles of view to obtain a prediction result corresponding to the images at the plurality of angles of view. The prediction result indicates a position of at least an object in the surrounding environment of the vehicle. The autonomous vehicle may plan a travel path of the vehicle based on the prediction result.

It should be noted that the vehicle may be a car, a truck, a motorcycle, a bus, a boat, an airplane, a helicopter, a lawn mower, a recreational vehicle, a playground vehicle, a construction device, a trolley, a golf cart, a train, or the like. This is not particularly limited in embodiments of this application.

For another example, in the field of intelligent surveillance, many cameras are mounted in public places and on traffic roads. After capturing images of a surrounding environment at a plurality of angles of view, a few intelligent cameras can perform an object detection task based on the images at the plurality of angles of view.

For another example, in the field of smart household, a mobile robot (for example, a robotic vacuum cleaner, a tutoring robot, or another mobile robot) may capture images of a surrounding environment of the robot at a plurality of angles of view, and perform object detection based on the captured images at the plurality of angles of view to obtain a prediction result corresponding to the images at the plurality of angles of view. The prediction result indicates a position of at least one obstacle around the mobile robot.

Application scenario 4: semantic segmentation (semantic segmentation) on a 3D image

For example, after obtaining a 3D image of a scene, an electronic device may obtain images of the scene at a plurality of angles of view from the 3D image, and generate a prediction result based on the images of the scene at the plurality of angles of view. The prediction result indicates categories of all pixels in an image of the scene at each angle of view.

It should be noted that the foregoing plurality of example application scenarios are merely intended for ease of understanding this solution, and this application may be further applied to other application scenarios. Examples are not exhaustively listed herein. In the foregoing application scenarios, after images of a same scene at a plurality of angles of view are obtained, the images of the scene at the plurality of angles of view may be input to a machine learning model, and feature extraction is performed on the images at the plurality of angles of view by using the solution provided in this application, to obtain feature information of each image. Then a prediction result may be generated based on the feature information of each image. This helps obtain more abundant information in a feature extraction stage, and also helps improve accuracy of a finally output prediction result.

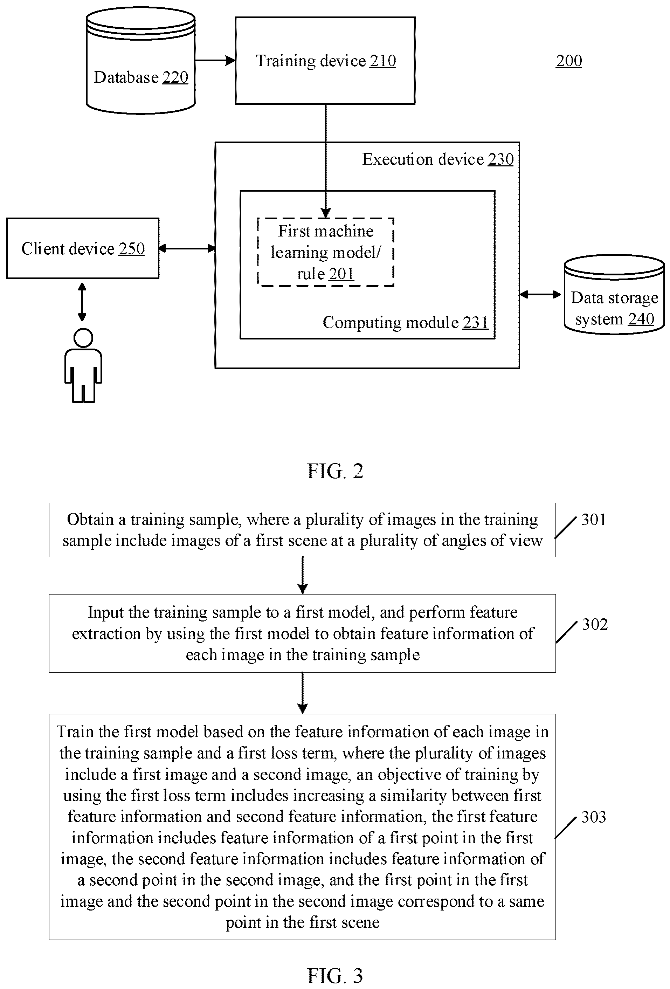

Before a method provided in embodiments of this application is described in detail, refer to FIG. 2. FIG. 2 is a diagram of a system architecture of an image processing system according to an embodiment of this application. In FIG. 2, the image processing system 200 includes a training device 210, a database 220, an execution device 230, a data storage system 240, and a client device 250. The execution device 230 includes a computing module 231.

The database 220 stores a training data set. The training data set includes a plurality of training samples. A plurality of images in each training sample include images of one first scene at a plurality of angles of view. In a training stage of a first machine learning model/rule 201, the training device 210 generates the first machine learning model/rule 201, and performs iterative training on the first machine learning model/rule 201 by using the training data set to obtain a trained first machine learning model/rule 201. The first machine learning model/rule 201 may be specifically represented as a neural network, or may be represented as a non-neural-network machine learning model. For example, the first machine learning model/rule 201 may be a convolutional neural network, a residual neural network, a transform model, or a model of another type. Examples are not exhaustively listed herein.

In a process in which the training device 210 trains the first machine learning model/rule 201 once, specifically, refer to FIG. 3. FIG. 3 is a schematic flowchart of a model training method according to an embodiment of this application. 301: The training device 210 obtains a training sample, where a plurality of images in the training sample include images of a first scene at a plurality of angles of view.

302: The training device 210 inputs the training sample to a first model, and performs feature extraction by using the first model to obtain feature information of each image in the training sample.

303: The training device 210 trains the first model based on the feature information of each image in the training sample and a first loss term, where the plurality of images include a first image and a second image, an objective of training by using the first loss term includes increasing a similarity between first feature information and second feature information, the first feature information includes feature information of a first point in the first image, the second feature information includes feature information of a second point in the second image, and the first point in the first image and the second point in the second image correspond to a same point (subsequently referred to as a "target point" for ease of description) in the first scene.

For example, that "the first point in the first image and the second point in the second image correspond to a same target point in the first scene" may be understood as that the first point is a point obtained by observing the target point at a first angle of view and the second point is a point obtained by observing the target point at a second angle of view. In other words, the first point in the first image and the second point in the second image have same semantics.

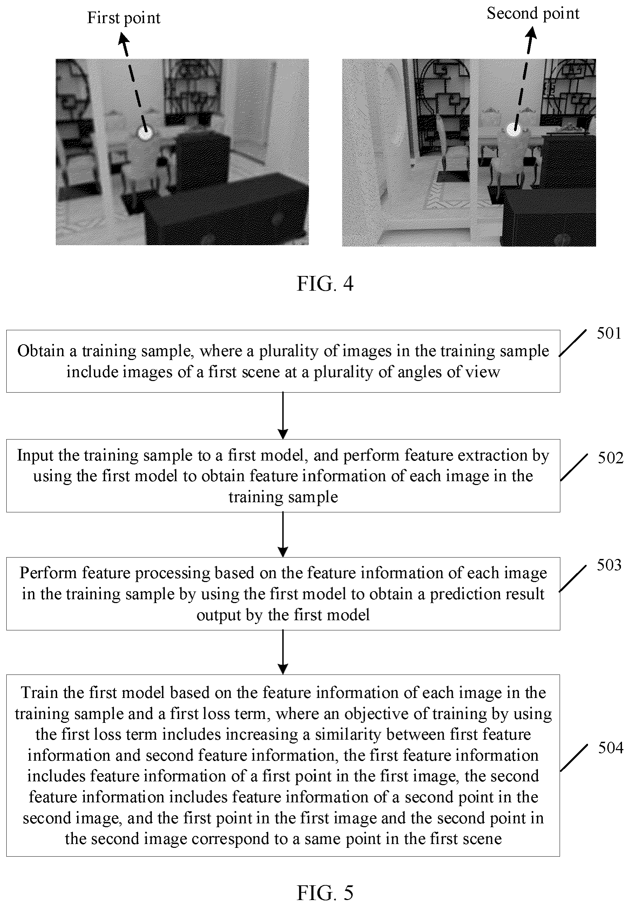

For more intuitive understanding of this solution, refer to FIG. 4. FIG. 4 is a diagram of a first point and a second point according to an embodiment of this application. FIG. 4 includes two sub-diagrams: a sub-diagram on the left and a sub-diagram on the right. The sub-diagram on the left and the sub-diagram on the right in FIG. 4 respectively show images of a first scene (to be specific, a three-dimensional indoor environment shown in FIG. 4) at two different angles of view. In FIG. 4, a target point is a point on a chair back in the first scene. The sub-diagram on the left in FIG. 4 shows a first point that is in a first image and that corresponds to the target point. The sub-diagram on the right in FIG. 4 shows a second point that is in a second image and that corresponds to the target point. It should be understood that the example in FIG. 4 is merely intended for ease of understanding this solution, but not to limit this solution.

It should be noted that, because a deviation may occur when the first feature information and the second feature information are obtained, a point that is in three-dimensional space and that corresponds to the first point may or may not completely overlap a point that is in the three-dimensional space and that corresponds to the second point. For example, a short distance exists between the two points.

In this embodiment of this application, an objective of training includes increasing a similarity between feature information, in images at different angles of view, of a same point in the first scene. In the foregoing solution, when feature extraction is performed on images of a same scene at different angles of view by using a trained first model, feature information, in images at different angles of view, of a same point in the scene is more similar. In this case, feature information obtained by using the first model can indicate a relationship between images at different angles of view. This helps obtain more abundant information in a feature extraction stage. In addition, the model can integrate information at a plurality of angles of view. This also helps enhance a geometric perception capability of the model.

The trained first machine learning model/rule 201 obtained by the training device 210 may be applied to the computing module 231 of the execution device 230. For example, the execution device 230 may be represented as a mobile phone, a tablet computer, a notebook computer, a virtual reality (virtual reality, VR) device, a monitoring system, a radar data processing system, or a device of another type.

In an inference stage of the first machine learning model/rule 201, the execution device 230 may input to-be-processed data to the first machine learning model/rule 201 of the computing module 231, to process the to-be-processed data by using the first machine learning model/rule 201 to obtain a prediction result output by the first machine learning model/rule 201. The execution device 230 may invoke data, code, and the like in the data storage system 240, and may also store data, instructions, and the like into the data storage system 240. The data storage system 240 may be deployed on the execution device 230, or the data storage system 240 may be an external memory relative to the execution device 230.

In some embodiments of this application, refer to FIG. 2. The execution device 230 and the client device 250 may be independent devices. The execution device 230 is provided with an input/output (I/O) interface to exchange data with the client device 250. A "user" may input to-be-processed data by using the client device 250. The client device 250 sends the to-be-processed data to the execution device 230 through the I/O interface. After generating, by using the first machine learning model/rule 201 in the computing module 231, prediction and decision-making information corresponding to the to-be-processed data, the execution device 230 may return the prediction and decision-making information to the client device 250 through the I/O interface, to provide the prediction and decision-making information for the user.

It should be noted that FIG. 2 is merely a diagram of an architecture of an image processing system according to an embodiment of the present invention, and a positional relationship between devices, components, modules, and the like shown in the figure does not constitute any limitation. For example, in some other embodiments of this application, the execution device 230 may be configured in the client device 250. For example, when the client device is a mobile phone or a tablet computer, the execution device 230 may be a module that is in a host processor (Host CPU) of the mobile phone or the tablet computer and that is configured to process an array image, or the execution device 230 may be a graphics processing unit (graphics processing unit, GPU) or a neural-network processing unit (NPU) in the mobile phone or the tablet computer. The GPU or the NPU is mounted to the host processor as a coprocessor, and the host processor allocates a task to the GPU or the NPU.

With reference to the foregoing descriptions, the following starts to describe specific implementation processes of a training stage and an application stage of an image processing method provided in embodiments of this application.

1. Training stage

In embodiments of this application, a process of training the first machine learning model/rule 201 by the training device 210 by using the training data set maintained in the database 220 is described in the training stage. Specifically, FIG. 5 is another schematic flowchart of a model training method according to an embodiment of this application. The model training method provided in this embodiment of this application may include the following steps.

501: Obtain a training sample, where a plurality of images in the training sample include images of a first scene at a plurality of angles of view.

In this embodiment of this application, a training device may obtain a training data set. The training data set includes a plurality of training samples and an expected result corresponding to each training sample. One training sample includes a plurality of images. The plurality of images include images of the first scene at a plurality of angles of view. For example, the first scene may be an environment, a person, an animal, an object, or a first scene of another type. For example, the "environment" may be a traffic road environment, an indoor environment, a park environment, or an environment of another type; the "person" may be a virtual person or a physical person; and the "animal" may be a virtual animal or a physical animal. A specific representation form of the first scene may be flexibly determined based on an actual case. This is not limited in this embodiment of this application.

For example, a task performed by a first model may be any one of the following tasks: generating an image at a new angle of view, image classification, object detection, semantic segmentation on an image, or another task in a three-dimensional scene. Examples are not exhaustively listed herein. A specific representation form of the expected result corresponding to each training sample needs to be determined based on a type of the task performed by the first model. For example, if the task of the first model is to generate an image of the first scene at a new angle of view based on images of the first scene at a plurality of known angles of view, the "training sample" may further include the new angle of view, and the "expected result corresponding to the training sample" may be a correct image of the first scene at the new angle of view, or may be referred to as an expected image of the first scene at the new angle of view.

For another example, if the task of the first model is to perform image classification on the first scene based on images of the first scene at a plurality of angles of view, the "expected result corresponding to the training sample" may be represented as a correct category of the first scene. For another example, if the task of the first model is to perform object detection on the first scene based on images of the first scene at a plurality of angles of view, the "expected result corresponding to the training sample" may be represented as correct position information of at least one object in the first scene.

For another example, if the task of the first machine learning model is to perform semantic segmentation on images of the first scene at a plurality of angles of view, the "expected result corresponding to the training sample" may be represented as a correct category of each pixel in each of the plurality of images, or the like. It should be understood that the examples herein are merely intended for ease of understanding this solution, but not to limit this solution.

502: Input the training sample to the first model, and perform feature extraction by using the first model to obtain feature information of each image in the training sample.

In this embodiment of this application, the training device may perform step 502 in a plurality of manners. In an implementation, step 502 may include: The training device may perform feature extraction on each image in the training sample by using the first model to obtain initial feature information of each image. To be specific, initial feature information of each pixel in each image is obtained.

The training device may update initial feature information of a plurality of first pixels in each image based on the initial feature information of each image in the training sample by using the first model to obtain updated feature information of each first pixel. The feature information of each image in the training sample may include the updated feature information of each first pixel in each image, and may further include initial feature information of a fourth pixel in each image.

The fourth pixel and the first pixel are different pixels in a same image.

In this embodiment of this application, in a feature extraction stage of the first model, after initial feature information of a first pixel in an image of the first scene at a specific angle of view is obtained, feature information of a second pixel may be obtained from an image of the first scene at another angle of view, where the first pixel and the second pixel have same semantics. Fusion is performed on initial feature information of the second pixel and initial feature information of the first pixel to obtain updated feature information of the first pixel. To be specific, updated feature information, included in the feature information of each image in the training sample, of the first pixel is obtained. In the foregoing manner, the updated feature information of the first pixel includes feature information, at a plurality of angles of view, of a specific point in space. In this case, the feature information of each image can indicate a geometric constraint between images at different angles of view. This helps obtain more abundant information, to improve accuracy of a prediction result output by the first model.

For example, the training device may perform random sampling on a plurality of pixels included in each image to obtain the plurality of first pixels in each image; or the training device may randomly sample a plurality of first pixels from an area, in each image, that carries abundant information; or the training device may obtain a plurality of first pixels from each image in another manner. The examples herein are merely intended to prove implementability of this solution, but not to limit this solution.

In a process of updating initial feature information of any first pixel, optionally, the training device may obtain initial feature information of at least one second pixel, where the first pixel and the second pixel are points in different images included in the training sample, and the first pixel and the second pixel have same semantics. The training device performs fusion on the initial feature information of the first pixel and initial feature information of all second pixels to obtain feature information of the first pixel.

For example, the first pixel is a point in a third image included in the training sample, the second pixel is a point in a fourth image included in the training sample, and the third image and the fourth image are different images in the training sample. It should be noted that the third image and a first image may be a same image or different images, the third image and a second image may be a same image or different images, the fourth image and the first image may be a same image or different images, and the fourth image and the second image may be a same image or different images. Provided that the third image and the fourth image are different images in the training sample, relationships between the first image and the third image and between the second image and the third image, and relationships between the first image and the fourth image and between the second image and the fourth image are not limited in this application.

For a specific implementation of "obtaining the initial feature information of the second pixel", for example, the training device may obtain at least one third point on a third line, where the third line passes through the first pixel, and the third line further passes through a focus of a camera that captures the third image and/or an origin of an image coordinate system corresponding to the third image.

For example, the training device may randomly sample a plurality of third points from the third line; or may evenly sample a plurality of third points from the third line, where distances between different third points among the plurality of third points are the same; or may obtain the at least one third point from the third line in another manner. Examples are not exhaustively listed herein. After determining the at least one third point, the training device projects each third point to all fourth images to obtain a plurality of projected-to points corresponding to the at least one third point, where the fourth image is an image in the training sample other than the third image, one projected-to point is a point obtained by projecting one third point to one fourth image, and the plurality of projected-to points include the second pixel. The training device obtains a feature information set, where the feature information set includes initial feature information of each of the plurality of projected-to points.

For further understanding of this solution, the following discloses an example of a formula used in the foregoing steps:

$$\mathcal{R}(\delta) = t_i + \delta R_i K_i^{-1}[u_i{}^T, 1]^\top \qquad (1)$$

$\mathcal{R}(\delta)$ represents the third line. $u_i = [u, v]^T$ represents coordinate information of a first pixel in an $i^{th}$ image (this is an example of the third image) in the training sample, where the coordinate information is two-dimensional coordinate information. $K_i$ represents an intrinsic parameter of a camera that captures the $i^{th}$ image. $[R_i, t_i]$ represents an extrinsic parameter of the camera that captures the $i^{th}$ image.

The training device samples $N_s$ third points $p^s = \mathcal{R}(\delta^s)$ along a ray $\mathcal{R}(\delta)$, to be specific, $s = 1, 2, ..., N_s$. A formula for projecting all the third points in $p^s$ to a $j^{th}$ image (namely, any fourth image) is as follows:

$$d_j^s \left[ v_j^{s^T}, 1 \right]^T = K_j R_j^{-1} \left( p^s - t_j \right) \quad (2)$$

$v_j^s$ represents coordinate information of a projected-to point obtained by projecting $p^s$ to the $j^{th}$ image, where the coordinate information is two-dimensional coordinates. $d_j^s$ represents depth information of $v_j^s$, to be specific, a distance between $v_j^s$ and a camera that captures the $j^{th}$ image. $K_j$ represents an intrinsic parameter of the camera that captures the $j^{th}$ image. $[R_j, t_j]$ represents an extrinsic parameter of the camera that captures the $j^{th}$ image. In this case, a plurality of projected-to points, namely, $\{v_j^s\}_{s=1}^{N_s}$, can be obtained by projecting, to the $j^{th}$ image, all the third points sampled from the ray $\mathcal{R}(\delta)$. It should be understood that the examples in the formula (1) and the formula (2) are merely intended for ease of understanding this solution, but not to limit this solution.

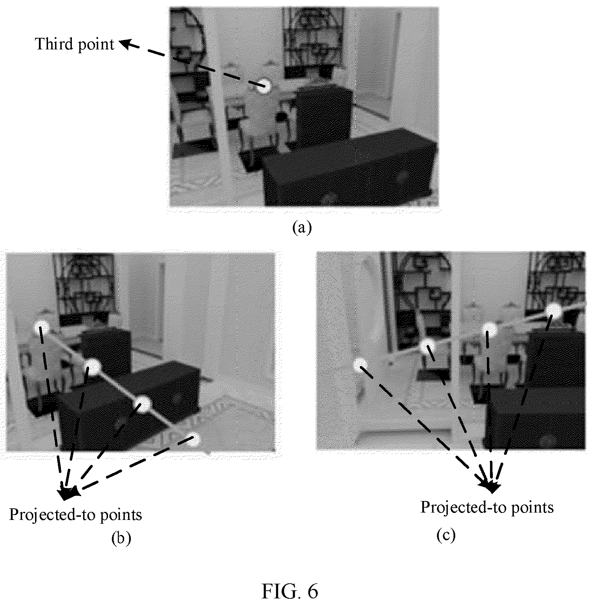

For more intuitive understanding of this solution, refer to FIG. 6. FIG. 6 is a diagram of a plurality of projected-to points according to this application. FIG. 6 includes three sub-diagrams: (a), (b), and (c). The three sub-diagrams (a), (b), and (c) in FIG. 6 respectively show images of a same first scene at three different angles of view. The sub-diagram (a) in FIG. 6 represents a third image. The sub-diagram (b) and sub-diagram (c) in FIG. 6 show two different fourth images. The sub-diagram (a) in FIG. 6 shows a third point. Four points are sampled from a third line that passes through the third point. The sub-diagram (b) in FIG. 6 shows four projected-to points obtained by projecting the sampled four points to the sub-diagram (b) in FIG. 6. The sub-diagram (c) in FIG. 6 shows four projected-to points obtained by projecting the sampled four points to the sub-diagram (c) in FIG. 6. It should be understood that the example in FIG. 6 is merely intended for ease of understanding this solution, but not to limit this solution.

For a specific implementation of "performing fusion on the initial feature information of the first pixel and the initial feature information of all the second pixels", in an implementation, after obtaining the feature information set, the training device may first aggregate initial feature information of all projected-to points in each fourth image in the feature information set to obtain first aggregated feature information, and the training device performs fusion on first aggregated feature information of all the fourth images and the initial feature information of the first pixel to obtain the updated feature information of the first pixel.

For further understanding of this solution, the following discloses an example of a formula used in the foregoing steps by using an example in which the initial feature information of the first pixel is updated by using an attention mechanism.

$$g_j = \text{MHA}(f_i, \{g_j^s + \mathcal{P}(s)\}_{s=1}^{N_s}) \quad (3)$$

$g_j$ represents feature information obtained by aggregating initial feature information of a plurality of projected-to points in the $j^{th}$ image (that is, the first aggregated feature information). $f_i$ represents initial feature information of $u_i$ (this is an example of the first pixel) in the $i^{th}$ image (this is an example of the third image). $g_j^s$ represents initial feature information of an $s^{th}$ projected-to point in the $j^{th}$ image. $\mathcal{P}(s)$ represents feature information of a position (position embedding) of a third point corresponding to the $s^{th}$ projected-to point, where the position of the third point may be three-dimensional coordinates of the third point. $f_i$ is used as a query (query) matrix in a multi-head attention mechanism (multi-head attention mechanism, MHA). $\{g_j^s + \mathcal{P}(s)\}_{s=1}^{N_s}$ is used as a key (key) matrix and a value (value) matrix in the MHA.

$$f_i' = \text{MHA}(f_i, \{g_j\}_{j=1, j \neq i}^{N_{near}}) \quad (4)$$

$f_i'$ represents the updated feature information of the first pixel. For a meaning of $f_i$, refer to the foregoing descriptions.

$N_{near}$ represents that the training sample includes a total of $N_{near}$ images. $\{g_j\}_{j=1,j \neq i}^{N_{near}}$ represents the first aggregated feature information of all the fourth images in the training sample. $f_i$ is used as a query matrix in the MHA. $\{g_j\}_{j=1,j \neq i}^{N_{near}}$ is used as a key matrix and a value matrix in the MHA. It should be understood that the examples in the formula (3) and the formula (4) are merely intended to prove implementability of this solution, and fusion may alternatively be performed on the "initial feature information of all the projected-to points" and the "initial feature information of the first pixel" in another manner. A specific fusion manner is not limited in this embodiment of this application.

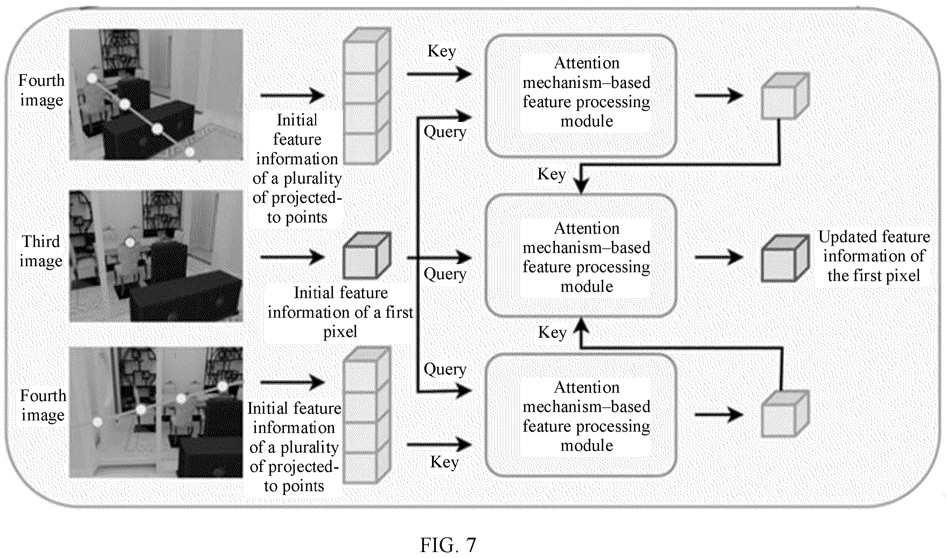

For more intuitive understanding of this solution, refer to FIG. 7. FIG. 7 is another diagram of a plurality of projected-to points according to this application. In FIG. 7, for example, the training sample includes three images. During updating of initial feature information of one first pixel in a third image, initial feature information of a plurality of projected-to points may be obtained from each image (namely, each fourth image) in the training sample other than the third image. The initial feature information of the first pixel is used as a query (query) matrix, the initial feature information of all the projected-to points in the fourth image is used as a key (key) matrix, and processing is performed by using an attention mechanism-based feature processing model to obtain an intermediate result. Then the initial feature information of the first pixel is used as a query (query) matrix, the intermediate result corresponding to the fourth image is used as a key (key) matrix, and processing is performed by using the attention mechanism-based feature processing model to obtain updated feature information of the first pixel. It should be understood that the example in FIG. 7 is merely intended for ease of understanding this solution, but not to limit this solution.

In another implementation, after obtaining the feature information set, the training device may alternatively separately perform fusion on the initial feature information of each projected-to point in the feature information set and the initial feature information of the first pixel to obtain the updated feature information of the first pixel.

The training device may update initial feature information of each first pixel in the training sample in the foregoing manner, to obtain the updated feature information of each first pixel and then obtain the feature information of each image in the training sample. The feature information of each image in the training sample may include the updated feature information of each first pixel in each image, and may further include the initial feature information of the fourth pixel in each image. The fourth pixel and the first pixel are different pixels in a same image.

In this embodiment of this application, a simple solution for obtaining the initial feature information of the second pixel is provided, to reduce implementation difficulty of this solution while ensuring that the initial feature information of the second pixel can be accurately obtained. In another implementation, step 502 may include: The training device may perform feature extraction on each image in the training sample by using the first model to obtain initial feature information of each image. The feature information of each image in the training sample includes the initial feature information of each image in the training sample.

503: Perform feature processing based on the feature information of each image in the training sample by using the first model to obtain a prediction result output by the first model.

In this embodiment of this application, similar to the specific representation form of the "expected result corresponding to each training sample", a specific representation form of the "prediction result output by the first model" also needs to be determined based on the type of the task performed by the first model. For example, if the task of the first model is to generate an image of the first scene at a new angle of view based on images of the first scene at a plurality of known angles of view, the "training sample" may further include the new angle of view, and the "prediction result output by the first model" may be a predicted image of the first scene at the new angle of view.

If the task of the first model is to generate an image of the first scene at a new angle of view, the training device may perform step 503 in a plurality of manners. In an implementation, the predicted image corresponding to the training sample includes first color values of a plurality of pixels, and step 503 may include: The training device performs feature processing based on the feature information of each image in the training sample by using the first model to obtain information that is generated by the first model and that corresponds to each third pixel. The third pixel is any one of the plurality of pixels, and the information corresponding to each third pixel includes a plurality of second color values and a voxel density corresponding to each second color value.

For example, the predicted image may include a plurality of pixels. For each third pixel in the predicted image, before performing step 501, the training device may obtain a fourth line corresponding to each third pixel, where the fourth line uses an origin of a camera coordinate system corresponding to the predicted image as a starting point and passes through the third pixel; the training device performs sampling on the fourth line to obtain a plurality of sampling points corresponding to the third pixel; and the training device repeatedly performs the foregoing steps to obtain a sampling point set corresponding to all the pixels in the predicted image. The sampling point set includes a plurality of sampling points corresponding to each pixel in the predicted image, and the training sample may further include the sampling point set.

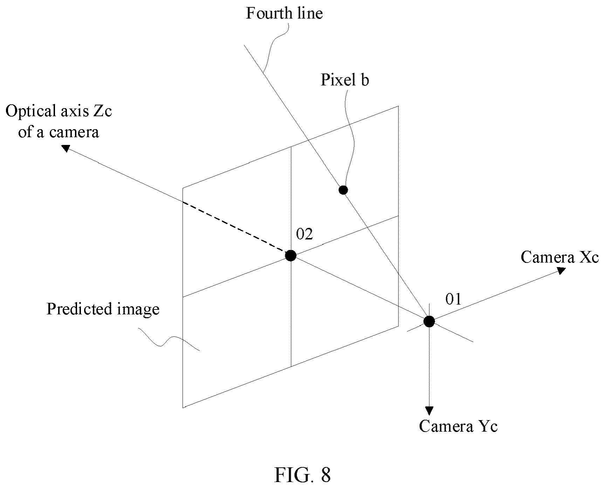

For more intuitive understanding of this solution, refer to FIG. 8. FIG. 8 is a diagram of a fourth line according to an embodiment of this application. As shown in FIG. 8, the origin of the camera coordinate system corresponding to the predicted image is 01, an X-axis of the camera coordinate system is a camera Xc in FIG. 4, a Y-axis of the camera coordinate system is a camera Yc in FIG. 4, and a Z-axis of the camera coordinate system is a camera Zc in FIG. 4. For example, a first color value of a pixel b in the predicted image is to be obtained. The origin 01 of the camera coordinate system may be used as a starting point, a light ray is emitted to the pixel b, and the light ray passes through the pixel b, to obtain a fourth line corresponding to the pixel b. Sampling may be performed on the fourth line corresponding to the pixel b to obtain a plurality of sampling points corresponding to the pixel b. It should be understood that the example in FIG. 8 is merely intended for ease of understanding this solution, but not to limit this solution.

The training device may input the training sample to the first model to obtain the information that is generated by the first model and that corresponds to each third pixel. The information corresponding to each third pixel includes second color values and voxel densities of a plurality of sampling points (subsequently referred to as "target sampling points" for ease of description) corresponding to each third pixel.

The training device normalizes the voxel density corresponding to each second color value to obtain a weight of each second color value, in other words, normalizes a voxel density corresponding to each target sampling point to obtain a weight of a second color value of the target sampling point. The training device performs, based on weights of the second color values of the plurality of target sampling points corresponding to the third pixel, weighted summation on the second color values of the plurality of target sampling points corresponding to the third pixel, to obtain a first color value of the third pixel. The training device repeatedly performs the foregoing steps for a plurality of times to obtain a first color value corresponding to each pixel in the predicted image. In other words, the predicted image is determined.

For further understanding of this solution, the following discloses an example of a formula used for calculating a first color value of a third pixel:

$$\hat{C}(r) = \frac{1}{\sum_i \exp(\sigma_i)} \sum_i c_i \cdot \exp(\sigma_i) \quad (5)$$

$\hat{C}(r)$ represents a first color value of a third pixel in the predicted image. Herein, it is assumed that the origin of the camera coordinate system corresponding to the predicted image is a starting point, and a fourth line passing through the third pixel is a ray $r$. $c_i$ represents a second color value of an $i^{th}$ sampling point on the ray $r$ (in other words, an $i^{th}$ sampling point corresponding to the third pixel). $\sigma_i$ represents a voxel density of the $i^{th}$ sampling point on the ray $r$. $\exp(\sigma_i)$ represents a weight, obtained by normalizing $\sigma_i$, of the $i^{th}$ sampling point on the ray $r$. It should be understood that, the example herein is merely intended for ease of understanding this solution, but not to limit this solution.

In this embodiment of this application, in the foregoing solution, a solution for obtaining a color value of a pixel in a predicted image is provided, and the foregoing solution is simple and convenient.

In an implementation, step 503 may include: The training sample includes only images of the first scene at a plurality of known angles of view, and a new angle of view, and the training device performs feature processing based on the feature information of each image in the training sample by using the first model to obtain the prediction result output by the first model. The prediction result is an image of the first scene at the new angle of view.

For another example, if the task of the first model is to perform image classification on the first scene based on images of the first scene at a plurality of angles of view, the "prediction result corresponding to the training sample" may be represented as a predicted category of the first scene. For another example, if the task of the first model is to perform object detection on the first scene based on images of the first scene at a plurality of angles of view, the "prediction result corresponding to the training sample" may be represented as detected position information of at least one object in the first scene.

For another example, if the task of the first machine learning model is to perform semantic segmentation on images of the first scene at a plurality of angles of view, the "detection result corresponding to the training sample" may be represented as a detected category of each pixel in each of the plurality of images, or the like. It should be understood that the examples herein are merely intended for ease of understanding this solution, but not to limit this solution.

504: Train the first model based on the feature information of each image in the training sample and a first loss term, where an objective of training by using the first loss term includes increasing a similarity between first feature information and second feature information, the first feature information includes feature information of a first point in the first image, the second feature information includes feature information of a second point in the second image, and the first point in the first image and the second point in the second image correspond to a same point in the first scene.

In this embodiment of this application, the training device may generate a value of a loss function based on the feature information of each image in the training sample, where the loss function includes the first loss term; and the training device updates a weight parameter of the first model based on the value of the loss function in a back propagation manner, to complete training of the first model once.

The first loss term indicates the similarity between the first feature information and the second feature information, and the objective of training by using the first loss term includes increasing the similarity between the first feature information and the second feature information. The first feature information includes the feature information of the first point in the first image, the second feature information includes the feature information of the second point in the second image, and the first point in the first image and the second point in the second image correspond to a same point in the first scene. In other words, the first point in the first image and the second point in the second image can be separately obtained by projecting a same point in the three-dimensional first scene to images at different angles of view. That is, the objective of training by using the first loss term includes increasing a similarity between feature information of points with same semantics in images at different angles of view.

For further understanding of this solution, for example, the training device randomly samples $N_c$ first points in the $i^{th}$ image included in the training sample. The plurality of first points are represented as $\{p\}_{N_c}$, where $N_c$ is an integer greater than or equal to 1, and p = *(p, q)* is any first point in $\{p\}_{N_c}$. For each first point p in the $i^{th}$ image, $q_+$ in the $j^{th}$ image in the training sample is specified as a second point (to be specific, a point with semantics similar to semantics of the first point). To obtain a plurality of second points $q_+$ corresponding to each first point $p$ in the $i^{th}$ image, the training device may first obtain coordinates of $p_3$ in three-dimensional space based on coordinates of the first point $p$, where $p$ is a point obtained by projecting $p_3$ to the $i^{th}$ image. A formula for calculating three-dimensional coordinate information of $p_3$ may be as follows:

$$p_3 = t_i + \delta_p R_i K_i^{-1} \overline{p} \qquad (6)$$

$\overline{p}$ is homogeneous coordinates (homogeneous coordinates) of $p$. $\delta_p$ represents a distance between $p_3$ and a camera that captures the $i^{th}$ image. $K_i$ represents an intrinsic parameter of the camera that captures the $i^{th}$ image. $[R_i, t_i]$ represents an extrinsic parameter of the camera that captures the $i^{th}$ image. It should be understood that the example in the formula (6) is merely intended for ease of understanding this solution, but not to limit this solution.

The training device projects $p_3$ in the three-dimensional space to the $j^{th}$ image in the training sample to obtain a projected-to point $q_+$ of $p_3$ in a $j^{th}$ image. To be specific, a second point $q_+$ that is in the $j^{th}$ image and that corresponds to the first point $p$ is obtained. The training device repeatedly performs the foregoing operations to obtain a projected-to point $q_+$ of $p_3$ in each image in the training sample other than the $i^{th}$ image. In this way, a plurality of second points $q_+$ corresponding to the first point $p$ are obtained.

After determining a plurality of second points $q_+$ that are in the $i^{th}$ image and that correspond to the first point $p$, the training device may obtain feature information of the first point $p$ and feature information of each second point $q_+$ from the feature information of each image included in the training sample, and calculate a similarity between the feature information of the first point $p$ and the feature information of each second point $q_+$. The training device repeatedly performs the foregoing operations to obtain a similarity between feature information of each first point in the $i^{th}$ image and feature information of a second point in another image in the training sample, and then obtain a similarity between feature information of each first point in each image in the training sample and feature information of a second point in another image in the training sample. In this way, the value of the first loss term is obtained through calculation.

It should be noted that the foregoing example is merely intended to prove implementability of this solution, and the training device may alternatively calculate the value of the first loss term in another manner. This is not limited in this embodiment of this application.

Optionally, in a process of training the first model by using the loss function, step 504 may include: The training device trains the first model based on the feature information of each image in the training sample and the loss function. The loss function includes the first loss term and a second loss term. The second loss term indicates a similarity between the first feature information and third feature information. An objective of training by using the second loss term includes reducing the similarity between the first feature information and the third feature information. The third feature information includes feature information of a third point in the second image. The third point is different from the second point.

For example, the training device may determine all third points corresponding to a first point in the $i^{th}$ image included in the training sample, and calculate a similarity between feature information of the first point in the $i^{th}$ image and feature information of all the third points. The training device may repeatedly perform the foregoing operations to obtain a similarity between feature information of each first point in the $i^{th}$ image in the training sample and feature information of all third points. The training device may repeatedly perform the foregoing operations to obtain a similarity between feature information of each first point in each image in the training sample and feature information of all third points. In this way, a value of the second loss term is obtained.

In a case, the third point in the second image may be all points in the second image other than the second point. In another case, both the second point and the third point in the second image are located on a first line. A second line is projected to the second image to obtain the first line. The second line passes through the first point, and the second line further passes through a focus of a camera that captures the first image and/or an origin of a camera coordinate system corresponding to the first image. It should be noted that a concept of the "second line" is similar to a concept of the "third line". For understanding, refer to the descriptions. Details are not described herein again. Alternatively, the training device may determine the third point in another manner. Examples are not exhaustively listed herein.

Optionally, if both the second point and the third point in the second image are located on the first line, a specific implementation process of determining, by the training device, all third points corresponding to a first point is described as follows. For example, in an implementation, the training device may project the second line to the $j^{th}$ image (this is an example of any second image) to obtain the first line. After determining a second point $q_+$ that is in the $j^{th}$ image and that corresponds to the first point $p$, the training device samples a plurality of third points from the first line other than the second point $q_+$ to obtain $\{q_-\}_{N_{neg}}$ in the $j^{th}$ image. All points on the first line other than the second point $q_+$ may be third points. $\{q_-\}_{N_{neg}}$ represents a set including a plurality of third points in the $j^{th}$ image. $N_{neg}$ represents a quantity of third points included in the $j^{th}$ image in the training sample. The training device may repeatedly perform the foregoing steps to determine a plurality of third points in each second image in the training sample. In this way, all third points corresponding to the first point p are obtained.

In another implementation, after determining the second line, the training device may determine a plurality of sampling points from the second line, and project the plurality of sampling points to the $j^{th}$ image to obtain a plurality of projected-to points. If the plurality of projected-to points include the second point $q_+$, it is determined that all of the plurality of projected-to points other than the second point $q_+$ are all third points included in the $j^{th}$ image. Alternatively, if the plurality of projected-to points do not include the second point $q_+$, it is determined that all of the plurality of projected-to points are all third points included in the $j^{th}$ image. The training device may repeatedly perform the foregoing steps to determine a plurality of third points in each second image in the training sample. In this way, all third points corresponding to the first point $p$ are obtained. The training device may alternatively obtain, in another manner, all third points corresponding to each first point. The example herein is merely intended for ease of understanding this solution, but not to limit this solution.

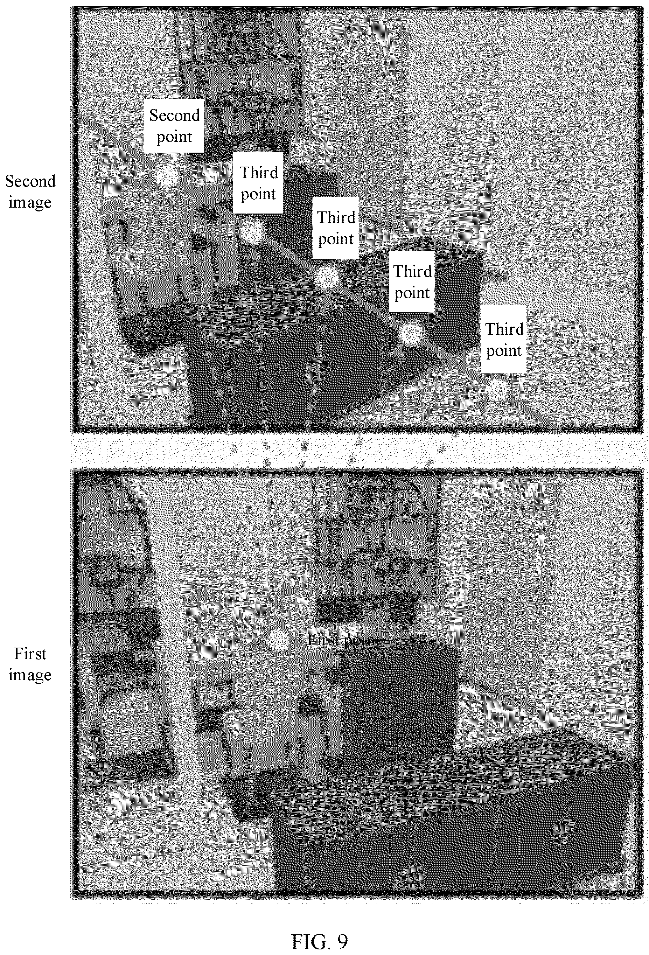

For more intuitive understanding of this solution, refer to FIG. 9. FIG. 9 is a diagram of a first point, a second point, and a third point according to an embodiment of this application. As shown in FIG. 9, a plurality of third points and a second point that is in a second image and that corresponds to a first point are located on a same line. It should be understood that the example in FIG. 9 is merely intended for ease of understanding this solution, but not to limit this solution.

In this embodiment of this application, after the first point is determined, the second line can be obtained, and the first line in the second image can be determined by projecting the second line to an image at another angle of view (that is, the second image). A point having same semantics as the first point is usually located on the first line. The third point is sampled from the first line. This helps the first model obtain, through learning, points in the image at the another angle of view that are consistent with points in the first scene corresponding to the first point, and points in the image at the another angle of view that are inconsistent with points in the first scene corresponding to the first point. This helps further improve accuracy of a prediction result output by the first model.

For further understanding of this solution, an example of the loss function is disclosed herein by using an example in which the loss function includes the first loss term and the second loss term:

$$\mathcal{L}_p^{NCE} = \sum_j - \log \frac{\exp(p' \cdot q'_+/\tau)}{\exp(p' \cdot q'_+/\tau) + \sum_{q_-} \lambda_{q_-} \exp(p' \cdot q'_-/\tau)} \qquad (7)$$

$$\mathcal{L}_{contrast} = \frac{1}{N_c} \sum_p \mathcal{L}_p^{NCE} \qquad (8)$$

$p'$ represents feature information of the first point $p$ in feature information of the $ith$ image included in the training sample. $q'_+$ represents feature information of the second point $q_+$ in feature information of the $j^{th}$ image included in the training sample. $q'_-$ represents feature information of a third point $q_-$ in the feature information of the $j^{th}$ image included in the training sample. $\tau$ represents a learnable scalar parameter. $\lambda_{q_-}$ represents a weight allocated to each $q_-$. $\exp(p' \cdot q'_+/\tau)$ represents a similarity between the feature information of the first point p and the feature information of the second point $q_+$. $\sum_{q_-} \lambda_{q_-} \exp(p' \cdot q'_-/\tau)$ represents a similarity between the feature information of the first point $p$ and feature information of a plurality of third points $q_-$. $L_P^{NCE}$ represents one first value of the loss function that corresponds to one first point $p$ in the $i^{th}$ image included in the training sample and the $j^{th}$ image (to be specific, any image other than the $i^{th}$ image in the training sample). The training device calculates a first value between one first point $p$ in the $i^{th}$ image and each other image (namely, each $j^{th}$ image) in the training sample, and averages a plurality of first values to obtain a second value of the loss function that corresponds to one first point p in the $i^{th}$ image included in the training sample and all other images.

The training device calculates a second value corresponding to each of $N_c$ first points p included in the $i^{th}$ image, and calculates an average value of $N_c$ second values to obtain $L_{contrast}$, where $L_{contrast}$ represents a third value of the loss function that corresponds to the $i^{th}$ image. The training device calculates a third value corresponding to each image in the training sample, and averages all third values to obtain the value of the loss function. It should be understood that the examples in the formula (7) and the formula (8) are merely intended for ease of understanding this solution, but not to limit this solution.

Because one first point *p* corresponds to a plurality of third points $q_-$ in the $j^{th}$ image, different third points $q_-$ may have a same weight $\lambda_{q_-}$ or different weights $\lambda_{q_-}$. Optionally, a weight $\lambda_{q_-}$ of each third point $q_-$ may be calculated based on a distance between the second point $q_+$ and each third point $q_-$. A longer distance between each third point $q_-$ and the second point $q_+$ indicates a larger weight $\lambda_{q_-}$ of the third point $q_-$. For example, the following discloses an example of a formula for calculating the weight $\lambda_{q_-}$:

$$\lambda_{q_-} = N_{neg} \frac{exp(|q_+ - q_-|_2/\tau')}{\Sigma_{q_-} \ exp(|q_+ - q_-|_2/\tau')} \qquad (9)$$

$\tau'$ is a scalar parameter. For meanings of other letters in the formula (9), refer to the foregoing descriptions of the formula (7) and the formula (8). Details are not described herein again. It should be understood that the example in the formula (9) is merely intended for ease of understanding this solution, but not to limit this solution.

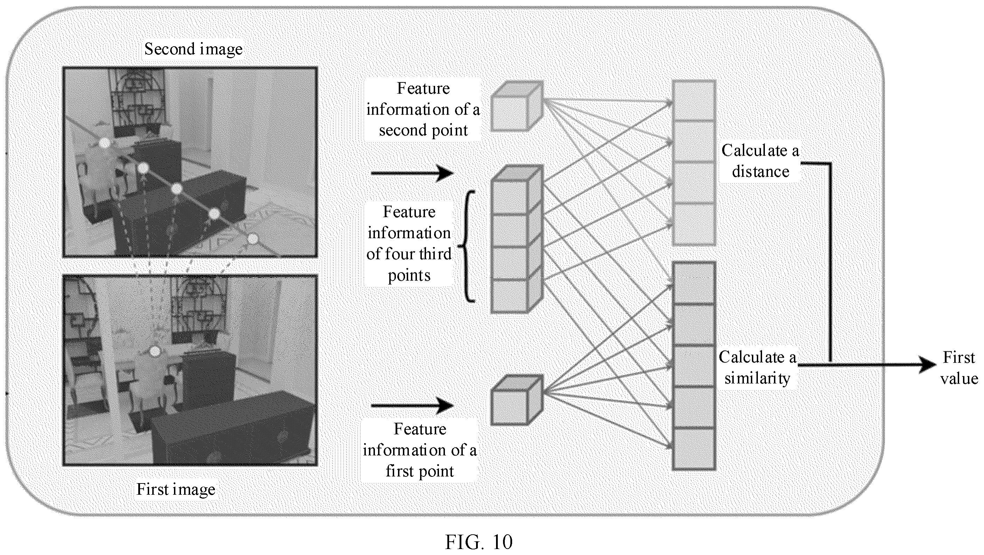

For more intuitive understanding of this solution, refer to FIG. 10. FIG. 10 is a diagram of a calculation process of a loss function according to an embodiment of this application. In FIG. 10, for example, one first value of the loss function that corresponds to one second image and one first point in one first image is to be calculated. After feature information of a first point in a first image, feature information of a second point in a second image, and feature information of a third point in the second image are obtained, a first similarity between the feature information of the first point and the feature information of the second point may be calculated, and a second similarity between the feature information of the first point and feature information of a plurality of third points may be calculated. A distance between the feature information of the second point and the feature information of the plurality of third points may be further calculated. Then one first value of the loss function that corresponds to one second image and one first point in one first image is generated based on the first similarity, the second similarity, and the distance. For understanding of a meaning of the "first value", refer to the foregoing descriptions. It should be understood that the example in FIG. 10 is merely intended for ease of understanding this solution, but not to limit this solution.

In this embodiment of this application, the first point in the first image and the second point in the second image correspond to a same point in the first scene, and the third point is different from the second point. In other words, the third point and the first point correspond to different points in the first scene. The objective of training by using the second loss term includes reducing the similarity between the first feature information of the first point and the third feature information of the third point. To be specific, feature information, in images at different angles of view, of a same point in the first scene is more similar; and feature information, in images at different angles of view, of different points in the first scene is more dissimilar. In this case, feature information obtained by using the first model can indicate more relationships between images at different angles of view. This helps further enhance a geometric perception capability of the model, to improve accuracy of a prediction result output by the first model.

Optionally, the loss function in step 504 may further include a third loss term. The third loss term indicates a similarity between the expected result corresponding to the training sample and the prediction result output by the first model. An objective of training by using the third loss term includes increasing the similarity between the expected result corresponding to the training sample and the prediction result output by the first model.

For example, if the task of the first model is to generate an image of the first scene at a new angle of view, the third loss term indicates a similarity between a predicted image and an expected image of the first scene at the new angle of view. Step 504 may include: The training device trains the first model based on the feature information of each image in the training sample, the predicted image, and a loss function (loss function), where the loss function includes the first loss term and the third loss term.

During training of the first model, because output of the first model is expected to be close to an actually wanted value as much as possible, a predicted value output by the first model may be compared with an expected value that is actually wanted, and then a weight vector of each layer of a neural network is updated based on a difference between the predicted value and the expected value (certainly, before the 1st update, an initialization process is usually performed, to be specific, parameters are preconfigured for all layers of the first model). For example, if the predicted value of the model is large, the weight vector is adjusted to decrease the predicted value, and adjustment is continuously performed until the first model can obtain, through prediction, a target value that is actually wanted or a value that is quite close to the target value that is actually wanted. Therefore, "how to obtain, through comparison, a difference between a predicted value and a target value" needs to be predefined. This is the third loss term. The third loss term is an important equation for measuring a difference between a predicted value and a target value. The loss function is used as an example. A larger output value (loss) of the loss function indicates a greater difference. Therefore, training of a deep neural network is a process of minimizing the loss.

In this embodiment of this application, a specific application scenario of this solution is provided, to increase a degree of combination between this solution and an actual application scenario, and reduce implementation difficulty of this solution.

Optionally, step 504 may include: The training device trains the first model based on the feature information of each image in the training sample, the predicted image, and a loss function (loss function), where the loss function includes the first loss term, the second loss term, and the third loss term.

The training device repeatedly performs steps 501 to 504 to implement iterative training on the first model until a convergence condition of the loss function is met, to obtain a trained first model.

2. Inference stage

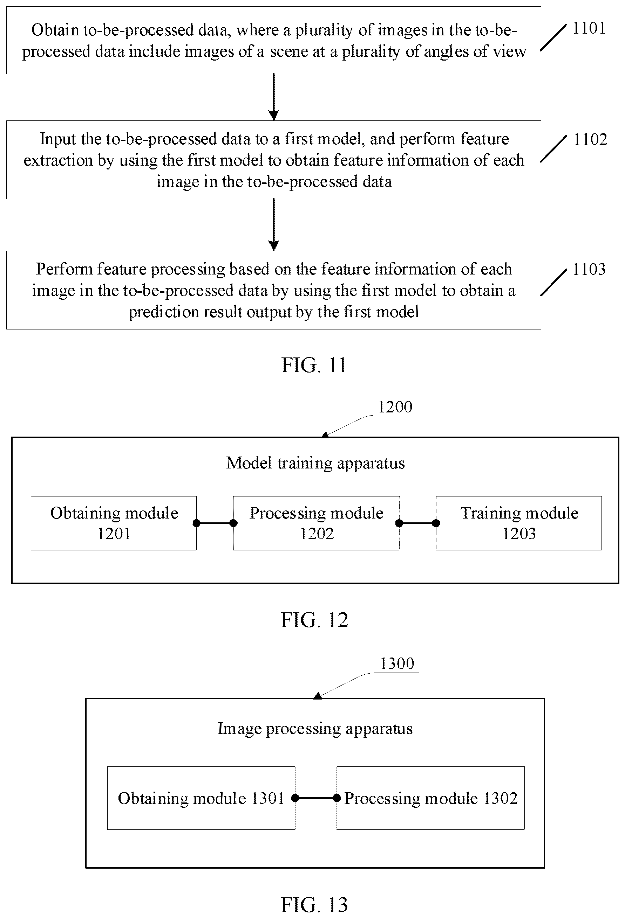

In this embodiment of this application, a process of outputting, by the execution device 230 by using the first machine learning model/rule 201, the prediction result corresponding to the to-be-processed data is described in the inference stage. Specifically, FIG. 11 is a schematic flowchart of an image processing method according to an embodiment of this application. The image processing method provided in this embodiment of this application may include the following steps.

1101: Obtain to-be-processed data, where a plurality of images in the to-be-processed data include images of a scene at a plurality of angles of view.

1102: Input the to-be-processed data to a first model, and perform feature extraction by using the first model to obtain feature information of each image in the to-be-processed data.

In this embodiment of this application, optionally, the feature information of each image in the to-be-processed data includes feature information of a plurality of points of each image in the to-be-processed data, and the plurality of points include a first pixel. Step 1102 may include: An execution device obtains initial feature information of a second pixel, where the first pixel and the second pixel are points in different images in the to-be-processed data packet, and the first pixel and the second pixel have same semantics; and performs fusion on initial feature information of the first pixel and the initial feature information of the second pixel to obtain feature information of the first pixel.

1103: Perform feature processing based on the feature information of each image in the to-be-processed data by using the first model to obtain a prediction result output by the first model.

In this embodiment of this application, optionally, the first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

Optionally, the first model is obtained through training based on the training sample, the first loss term, and a second loss term, and an objective of training by using the second loss term includes reducing a similarity between the first feature information and third feature information.

In this embodiment of this application, the first model in steps 1101 to 1103 is obtained by using the model training method described in the embodiment corresponding to FIG. 5. For a specific implementation of performing steps 1101 to 1103 by the execution device and meanings of nouns in steps 1101 to 1103, refer to the descriptions in the embodiment corresponding to FIG. 5. A difference lies in that the "training sample" in the embodiment corresponding to FIG. 5 is replaced with the "to-be-processed data" in the embodiment corresponding to FIG. 11. Details are not described herein again.

For more intuitive understanding of beneficial effect of this solution, the following further describes beneficial effect of this embodiment of this application with reference to experimental data. In an experiment, for example, a task of the first model is to generate an image of the first scene at a new angle of view. In addition, 3D-FRONT and ScanNet are selected as training datasets and datasets used during testing, and the model is evaluated by using three indicators: a peak signal-to-noise ratio (peak signal-to-noise ratio, PSNR), a structural similarity index (structural similarity index, SSIM), and a learned perceptual image patch similarity (learned perceptual image patch similarity, LPIPS). A higher PSNR and a higher SSIM indicate a better prediction result output by the model, and a lower LPIPS indicates a better prediction result output by the model. An experiment result is shown in Table 1 below.

Table 1

|  | PSNR | SSIM | LPIPS |
| --- | --- | --- | --- |
| Pixe1NeRF | 20.19 (22.44) | 0.736 (0.774) | 0.511 (0.450) |
| MVSNeRF | 22.90 (24.90) | 0.793 (0.824) | 0.408 (0.357) |
| Neuray | 22.75 (25.22) | 0.785 (0.838) | 0.369 (0.325) |

(continued)

|  | PSNR | SSIM | LPIPS |
|---|---|---|---|
| This application | 24.81 (25.58) | 0.831 (0.847) | 0.333 (0.320) |

Pixe1NeRF, MVSNeRF, and Neuray are three existing models. The experimental data in Table 1 is obtained by training the three models by using an existing method. Data outside parentheses in Table 1 is obtained by training the model by using simulated data and testing the model by using real data. Data inside the parentheses is obtained by training the model by using real data and testing the model by using real data. It can be learned from the data in Table 1 that a prediction result output by the model obtained based on the solution provided in this application is the best. Based on the embodiments corresponding to FIG. 1 to FIG. 11, to better implement the foregoing solutions in embodiments of this application, the following further provides related devices for implementing the foregoing solutions. Specifically, FIG. 12 is a diagram of a structure of a model training apparatus according to an embodiment of this application. The model training apparatus 1200 includes: an obtaining module 1201, configured to obtain a training sample, where a plurality of images in the training sample include images of a first scene at a plurality of angles of view; a processing module 1202, configured to input the training sample to a first model, and perform feature extraction by using the first model to obtain feature information of each image in the training sample; and a training module 1203, configured to train the first model based on the feature information of each image in the training sample and a first loss term.

The plurality of images include a first image and a second image. An objective of training by using the first loss term includes increasing a similarity between first feature information and second feature information. The first feature information includes feature information of a first point in the first image. The second feature information includes feature information of a second point in the second image. The first point in the first image and the second point in the second image correspond to a same point in the first scene.

In a possible design, the training module 1203 is specifically configured to train the first model based on the feature information of each image in the training sample, the first loss term, and a second loss term, where an objective of training by using the second loss term includes reducing a similarity between the first feature information and third feature information, the third feature information includes feature information of a third point in the second image, and the third point is different from the second point.

In a possible design, both the second point and the third point are located on a first line, a second line is projected to the second image to obtain the first line, the second line passes through the first point, and the second line further passes through a focus of a camera that captures the first image and/or an origin of a camera coordinate system corresponding to the first image.

In a possible design, the feature information of each image in the training sample includes updated feature information of a plurality of first pixels of each image in the training sample; and the processing module 1202 is specifically configured to obtain initial feature information of a second pixel, and perform fusion on initial feature information of the first pixel and the initial feature information of the second pixel to obtain updated feature information of the first pixel, where the first pixel and the second pixel are points in different images among the plurality of images, and the first pixel and the second pixel have same semantics.

In a possible design, the first pixel is included in a third image in the training sample, and the processing module 1202 includes: an obtaining submodule, configured to obtain at least one third point on a third line, where the third line passes through the first pixel, and the third line further passes through a focus of a camera that captures the third image and/or an origin of an image coordinate system corresponding to the third image, where the obtaining submodule is further configured to obtain a feature information set, where the feature information set includes initial feature information of each of a plurality of projected-to points, the projected-to point is a point obtained by projecting the third point to a fourth image, the fourth image is an image in the training sample other than the third image, and the plurality of projected-to points include the second pixel; and a fusion submodule, configured to perform fusion on the initial feature information of the first pixel and the feature information set.

In a possible design, the training sample further includes a new angle of view, and the processing module 1202 is further configured to perform feature processing based on the feature information of each image in the training sample by using the first model to obtain a predicted image of the first scene at the new angle of view; and the training module 1203 is specifically configured to train the first model based on the feature information of each image in the training sample, the predicted image, the first loss term, and a third loss term, where the third loss term indicates a similarity between the predicted image and an expected image of the first scene at the new angle of view.

In a possible design, the predicted image includes first color values of a plurality of pixels, and the processing module 1202 includes: a processing submodule, configured to perform feature processing by using the first model to obtain information that is generated by the first model and that corresponds to a third pixel, where the third pixel is any one of the plurality of pixels, and the information corresponding to the third pixel includes a plurality of second color values and a voxel density corresponding to each second color value; a normalization submodule, configured to normalize the voxel density corresponding to each second color value to obtain a weight of each second color value; and a weighted summation submodule, configured to perform weighted summation on the plurality of second color values based on the weight of each second color value to obtain a first color value of the third pixel.

It should be noted that content such as information exchange and an execution process between the modules/units in the model training apparatus 1200 is based on a same concept as that of the method embodiments corresponding to FIG. 3 to FIG. 11 in this application. For specific content, refer to the descriptions in the foregoing method embodiments of this application. Details are not described herein again.

FIG. 13 is a diagram of a structure of an image processing apparatus according to an embodiment of this application. The image processing apparatus 1300 includes: an obtaining module 1301, configured to obtain to-be-processed data, where a plurality of images in the to-be-processed data include images of a scene at a plurality of angles of view; and a processing module 1302, configured to input the to-be-processed data to a first model, and perform feature extraction by using the first model to obtain feature information of each image in the to-be-processed data. The processing module 1302 is further configured to perform feature processing based on the feature information of each image in the to-be-processed data by using the first model to obtain a prediction result output by the first model.

The first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

In a possible design, the first model is obtained through training based on the training sample, the first loss term, and a second loss term, an objective of training by using the second loss term includes reducing a similarity between the first feature information and third feature information, the third feature information includes feature information of a first pixel in the second image, and the first pixel is different from the second point.

In a possible design, the feature information of each image in the to-be-processed data includes feature information of a plurality of first pixels of each image in the to-be-processed data, and the processing module 1302 is specifically configured to obtain initial feature information of a second pixel, and perform fusion on initial feature information of the first pixel and the initial feature information of the second pixel to obtain feature information of the first pixel, where the first pixel and the second pixel are points in different images in the to-be-processed data packet, and the first pixel and the second pixel have same semantics.

It should be noted that content such as information exchange and an execution process between the modules/units in the image processing apparatus 1300 is based on a same concept as that of the method embodiments corresponding to FIG. 3 to FIG. 11 in this application. For specific content, refer to the descriptions in the foregoing method embodiments of this application. Details are not described herein again.

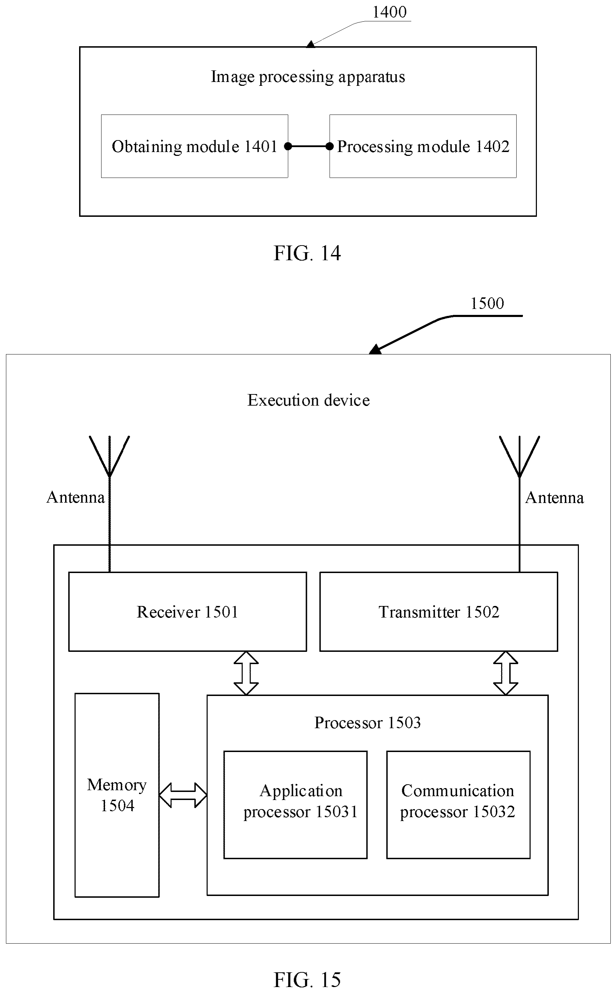

FIG. 14 is a diagram of a structure of an image processing apparatus according to an embodiment of this application. The image processing apparatus 1400 includes: an obtaining module 1401, configured to obtain to-be-processed data, where a plurality of images in the to-be-processed data include images of a scene at a plurality of angles of view; and a processing module 1402, configured to input the to-be-processed data to a first model, and perform feature extraction by using the first model to obtain feature information of each image in the to-be-processed data. The processing module is further configured to perform feature processing based on the feature information of each image in the to-be-processed data by using the first model to obtain a prediction result output by the first model.

The feature information of each image in the to-be-processed data includes feature information of a plurality of first pixels of each image in the to-be-processed data, and the processing module 1402 is specifically configured to obtain initial feature information of a second pixel, and perform fusion on initial feature information of the first pixel and the initial feature information of the second pixel to obtain feature information of the first pixel, where the first pixel and the second pixel are points in different images in the to-be-processed data packet, and the first pixel and the second pixel have same semantics.

In a possible design, the first model is obtained through training based on a training sample and a first loss term. A plurality of images in the training sample include images of a first scene at a plurality of angles of view. The plurality of images in the training sample include a first image and a second image. The first loss term indicates a similarity between first feature information and second feature information. The first feature information includes feature information of a first point in the first image. The second feature information includes feature information of a second point in the second image. The first point in the first image and the second point in the second image correspond to a same point in the first scene.

It should be noted that content such as information exchange and an execution process between the modules/units in the image processing apparatus 1400 is based on a same concept as that of the method embodiments corresponding to FIG. 3 to FIG. 11 in this application. For specific content, refer to the descriptions in the foregoing method embodiments of this application. Details are not described herein again.

The following describes an execution device provided in embodiments of this application. FIG. 15 is a diagram of a structure of an execution device according to an embodiment of this application. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data for the processor 1503. A part of the memory 1504 may further include a non-volatile random access memory (non-volatile random access memory, NVRAM). The memory 1504 stores processor and operation instructions, an executable module, or a data structure, or a subset thereof, or an extended set thereof. The operation instructions may include various operation instructions for implementing various operations.

The processor 1503 controls an operation of the execution device. During specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 1503 or implemented by the processor 1503. The processor 1503 may be an integrated circuit chip and has a signal processing capability. During implementation, the steps of the foregoing methods may be performed by a hardware integrated logic circuit in the processor 1503 or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1503 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1504, and the processor 1503 reads information in the memory 1504 and performs the steps of the foregoing methods in combination with hardware of the processor 1503.

The receiver 1501 may be configured to receive input digit or character information, and generate signal input related to related settings and function control of the execution device. The transmitter 1502 may be configured to output digit or character information through a first interface. The transmitter 1502 may be further configured to send instructions to a disk group through the first interface, to modify data in the disk group. The transmitter 1502 may further include a display device, for example, a display.

In this embodiment of this application, the application processor 15031 in the processor 1503 is configured to perform the image processing method performed by the execution device in the embodiments corresponding to FIG. 3 to FIG. 11. It should be noted that a specific manner of performing the foregoing steps by the application processor 15031 is based on a same concept as that of the method embodiments corresponding to FIG. 3 to FIG. 11 in this application, and technical effect of this embodiment of this application is the same as that of the method embodiments corresponding to FIG. 3 to FIG. 11 in this application. For specific content, refer to the descriptions in the method embodiments in this application. Details are not described herein again.

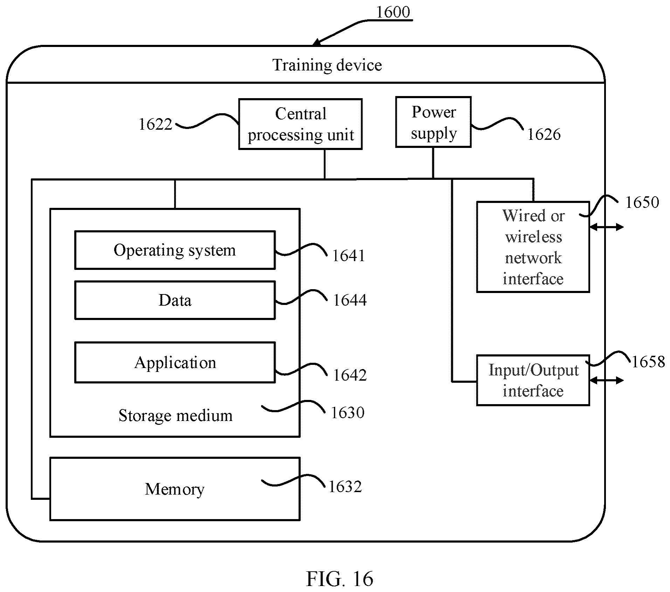

An embodiment of this application further provides a training device. FIG. 16 is a diagram of a structure of a training device according to an embodiment of this application. Specifically, the training device 1600 is implemented by using one or more servers. The training device 1600 may vary greatly due to different configurations or performance, and may include one or more central processing units (central processing units, CPU) 1622 (for example, one or more processors), a memory 1632, and one or more storage media 1630 (for example, one or more mass storage devices) for storing an application program 1642 or data 1644. The memory 1632 and the storage medium 1630 may be transient storage or persistent storage. A program stored in the storage medium 1630 may include one or more modules (not shown in the figure), and each module may include a series of instruction operations for the training device. Further, the central processing unit 1622 may be configured to communicate with the storage medium 1630, and perform, on the training device 1600, a series of instruction operations in the storage medium 1630.

The training device 1600 may further include one or more power supplies 1626, one or more wired or wireless network interfaces 1650, one or more input/output interfaces 1658, and/or one or more operating systems 1641, for example, Windows Server™, Mac OS X™, Unix™, Linux™, or FreeBSD™.

In this embodiment of this application, the central processing unit 1622 is configured to perform the model training method performed by the training device in the embodiments corresponding to FIG. 3 to FIG. 11. It should be noted that a specific manner of performing the foregoing steps by the central processing unit 1622 is based on a same concept as that of the method embodiment corresponding to FIG. 12 in this application, and technical effect of this embodiment of this application is the same as that of the method embodiment corresponding to FIG. 12 in this application. For specific content, refer to the descriptions in the method embodiments in this application. Details are not described herein again.

An embodiment of this application further provides a computer program product. When the computer program product is run on a computer, the computer is enabled to perform the steps performed by the execution device in the methods described in the embodiments shown in FIG. 3 to FIG. 11, or the computer is enabled to perform the steps performed by the training device in the methods described in the embodiments shown in FIG. 3 to FIG. 11.

An embodiment of this application further provides a computer-readable storage medium. The computer-readable storage medium stores a program for signal processing. When the program is run on a computer, the computer is enabled to perform the steps performed by the execution device in the methods described in the embodiments shown in FIG. 3 to FIG. 11, or the computer is enabled to perform the steps performed by the training device in the methods described in the embodiments shown in FIG. 3 to FIG. 11.

The execution device, the training device, the model training apparatus, or the image processing apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable the chip to perform the image processing method described in the embodiments shown in FIG. 3 to FIG. 11, or enable the chip to perform the model training method described in the embodiments shown in FIG. 3 to FIG. 11. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device capable of storing static information and instructions, or a random access memory (random access memory, RAM).

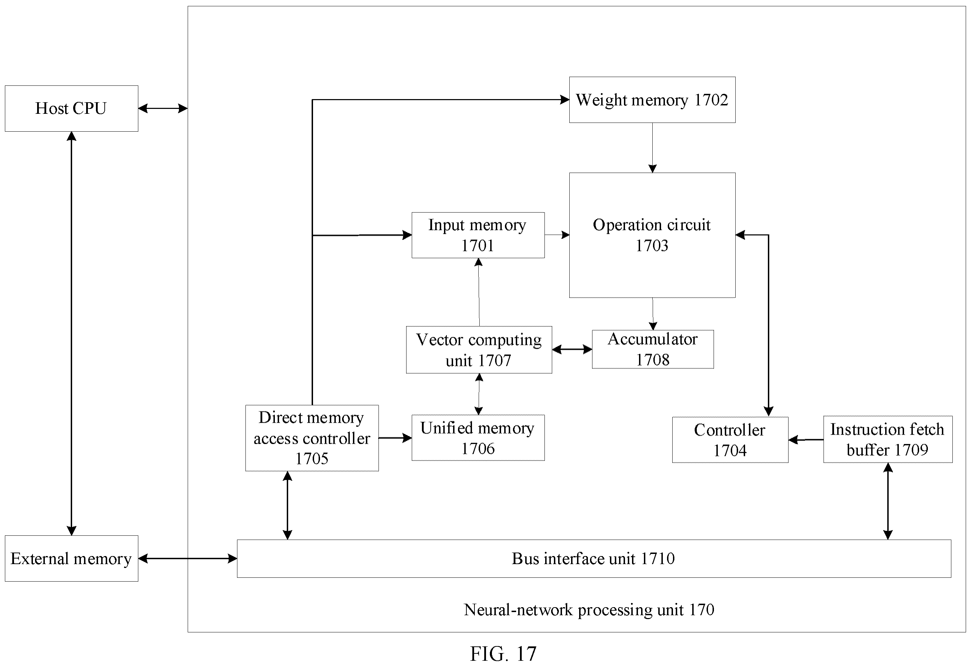

Specifically, FIG. 17 is a diagram of a structure of a chip according to an embodiment of this application. The chip may be represented as a neural-network processing unit NPU 170. The NPU 170 is mounted to a host CPU (Host CPU) as a coprocessor, and the host CPU allocates a task to the NPU 170. A core part of the NPU is an operation circuit 170. A controller 1704 controls the operation circuit 1703 to extract matrix data in a memory and perform a multiplication operation. In some implementations, the operation circuit 1703 includes a plurality of processing elements (Process Engine, PE). In some implementations, the operation circuit 1703 is a two-dimensional systolic array. The operation circuit 1703 may alternatively be a one-dimensional systolic array or another electronic circuit capable of performing mathematical operations such as multiplication and addition. In some implementations, the operation circuit 1703 is a general-purpose matrix processor.

For example, it is assumed that there are an input matrix A, a weight matrix B, and an output matrix C. The operation circuit fetches data corresponding to the matrix B from a weight memory 1702, and caches the data in each PE in the operation circuit. The operation circuit fetches data of the matrix A from an input memory 1701, performs a matrix operation on the matrix B and the data of the matrix A to obtain a partial result or a final result of a matrix, and stores the result in an accumulator (accumulator) 1708.

A unified memory 1706 is configured to store input data and output data. Weight data is directly transferred to the weight memory 1702 through a direct memory access controller (Direct Memory Access Controller, DMAC) 1705. Input data is also transferred to the unified memory 1706 through the DMAC.

A BIU is a bus interface unit, namely, a bus interface unit 1710, and is used for interaction between an AXI bus, and the DMAC and an instruction fetch buffer (Instruction Fetch Buffer, IFB) 1709. The bus interface unit (Bus Interface Unit, BIU for short) 1710 is used for the instruction fetch buffer 1709 to obtain instructions from an external memory, and is further used for the direct memory access controller 1705 to obtain raw data of the input matrix A or the weight matrix B from the external memory.

The DMAC is mainly configured to transfer input data in the external memory DDR to the unified memory 1706, transfer weight data to the weight memory 1702, or transfer input data to the input memory 1701.

A vector computing unit 1707 includes a plurality of operation processing units, and if needed, performs further processing, for example, vector multiplication, vector addition, an exponential operation, a logarithmic operation, or magnitude comparison, on output of the operation circuit. The vector computing unit is mainly used for network computing, for example, batch normalization (batch normalization), pixel-level summation, or upsampling on a feature plane, at a non-convolutional/fully-connected layer of a neural network.

In some implementations, the vector computing unit 1707 can store a processed output vector in the unified memory 1706. For example, the vector computing unit 1707 may apply a linear function and/or a non-linear function to the output of the operation circuit 1703, for example, perform linear interpolation on a feature plane extracted at a convolutional layer, or for another example, use a vector of an accumulated value to generate an activation value. In some implementations, the vector computing unit 1707 generates a normalized value, a pixel-level sum value, or both. In some implementations, the processed output vector can be used as activation input for the operation circuit 1703, for example, used at a subsequent layer of the neural network. The instruction fetch buffer (instruction fetch buffer) 1709 connected to the controller 1704 is configured to store instructions to be used by the controller 1704.

The unified memory 1706, the input memory 1701, the weight memory 1702, and the instruction fetch buffer 1709 are all on-chip memories. The external memory is private for a hardware architecture of the NPU.

An operation at each layer in the first model may be performed by the operation circuit 1703 or the vector computing unit 1707.

Any aforementioned processor may be a general-purpose central processing unit, a microprocessor, an ASIC, or one or more integrated circuits for controlling program execution of the method according to the first aspect.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware, and a same function may also be implemented by various specific hardware structures, for example, an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

**Claims**

1. A data processing method, wherein the method comprises:

   obtaining a training sample, wherein a plurality of images in the training sample comprise images of a first scene at a plurality of angles of view;
   inputting the training sample to a first model, and performing feature extraction by using the first model to obtain feature information of each image in the training sample; and
   training the first model based on the feature information of each image in the training sample and a first loss term, wherein
   the plurality of images comprise a first image and a second image, an objective of training by using the first loss term comprises increasing a similarity between first feature information and second feature information, the first feature information comprises feature information of a first point in the first image, the second feature information comprises feature information of a second point in the second image, and the first point in the first image and the second point in the second image correspond to a same point in the first scene.

2. The method according to claim 1, wherein training the first model based on the feature information of each image in the training sample and the first loss term comprises:
training the first model based on the feature information of each image in the training sample, the first loss term, and a second loss term, wherein an objective of training by using the second loss term comprises reducing a similarity between the first feature information and third feature information, the third feature information comprises feature information of a third point in the second image, and the third point is different from the second point.

3. The method according to claim 2, wherein both the second point and the third point are located on a first line, a second line is projected to the second image to obtain the first line, the second line passes through the first point, and the second line further passes through a focus of a camera that captures the first image and/or an origin of a camera coordinate system corresponding to the first image.

4. The method according to any one of claims 1 to 3, wherein the feature information of each image in the training sample comprises updated feature information of a plurality of first pixels of each image in the training sample, and performing feature extraction by using the first model to obtain the feature information of each image in the training sample comprises:

obtaining initial feature information of a second pixel, wherein the first pixel and the second pixel are points in different images among the plurality of images, and the first pixel and the second pixel have same semantics; and performing fusion on initial feature information of the first pixel and the initial feature information of the second pixel to obtain updated feature information of the first pixel.

5. The method according to claim 4, wherein the first pixel is comprised in a third image in the training sample, and obtaining the initial feature information of the second pixel comprises:

obtaining at least one third point on a third line, wherein the third line passes through the first pixel, and the third line further passes through a focus of a camera that captures the third image and/or an origin of an image coordinate system corresponding to the third image;
obtaining a feature information set, wherein the feature information set comprises initial feature information of each of a plurality of projected-to points, the projected-to point is a point obtained by projecting the third point to a fourth image, the fourth image is an image in the training sample other than the third image, and the plurality of projected-to points comprise the second pixel; and
performing fusion on the initial feature information of the first pixel and the initial feature information of the second pixel comprises:
performing fusion on the initial feature information of the first pixel and the feature information set.

6. The method according to any one of claims 1 to 3, wherein the training sample further comprises a new angle of view, and after performing feature extraction by using the first model to obtain the feature information of each image in the training sample, the method further comprises:

performing feature processing based on the feature information of each image in the training sample by using the first model to obtain a predicted image of the first scene at the new angle of view; and
training the first model based on the feature information of each image in the training sample and the first loss term comprises:
training the first model based on the feature information of each image in the training sample, the predicted image, the first loss term, and a third loss term, wherein the third loss term indicates a similarity between the predicted image and an expected image of the first scene at the new angle of view.

7. The method according to claim 5, wherein the predicted image comprises first color values of a plurality of pixels, and performing feature processing by using the first model to obtain the predicted image of the first scene at the new angle of view comprises:

performing feature processing by using the first model to obtain information that is generated by the first model and that corresponds to a third pixel, wherein the third pixel is any one of the plurality of pixels, and the information corresponding to the third pixel comprises a plurality of second color values and a voxel density corresponding to each second color value;

normalizing the voxel density corresponding to each second color value to obtain a weight of each second color value; and

performing weighted summation on the plurality of second color values based on the weight of each second color value to obtain the first color value of the third pixel.

8. An image processing method, wherein the method comprises:

obtaining to-be-processed data, wherein a plurality of images in the to-be-processed data comprise images of a scene at a plurality of angles of view;

inputting the to-be-processed data to a first model, and performing feature extraction by using the first model to obtain feature information of each image in the to-be-processed data; and

performing feature processing based on the feature information of each image in the to-be-processed data by using the first model to obtain a prediction result output by the first model, wherein

the first model is obtained through training based on a training sample and a first loss term, a plurality of images in the training sample comprise images of a first scene at a plurality of angles of view, the plurality of images in the training sample comprise a first image and a second image, the first loss term indicates a similarity between first feature information and second feature information, the first feature information comprises feature information of a first point in the first image, the second feature information comprises feature information of a second point in the second image, and the first point in the first image and the second point in the second image correspond to a same point in the first scene.

9. The method according to claim 8, wherein the first model is obtained through training based on the training sample, the first loss term, and a second loss term, an objective of training by using the second loss term comprises reducing a similarity between the first feature information and third feature information, the third feature information comprises feature information of a first pixel in the second image, and the first pixel is different from the second point.

10. The method according to claim 8 or 9, wherein the feature information of each image in the to-be-processed data comprises feature information of a plurality of first pixels of each image in the to-be-processed data, and performing feature extraction by using the first model to obtain the feature information of each image in the to-be-processed data comprises:

obtaining initial feature information of a second pixel, wherein the first pixel and the second pixel are points in different images in the to-be-processed data packet, and the first pixel and the second pixel have same semantics; and

performing fusion on initial feature information of the first pixel and the initial feature information of the second pixel to obtain feature information of the first pixel.

11. An image processing method, wherein the method comprises:

obtaining to-be-processed data, wherein a plurality of images in the to-be-processed data comprise images of a scene at a plurality of angles of view;

inputting the to-be-processed data to a first model, and performing feature extraction by using the first model to obtain feature information of each image in the to-be-processed data; and

performing feature processing based on the feature information of each image in the to-be-processed data by using the first model to obtain a prediction result output by the first model, wherein

the feature information of each image in the to-be-processed data comprises feature information of a plurality of first pixels of each image in the to-be-processed data, and performing feature extraction by using the first model to obtain the feature information of each image in the to-be-processed data comprises:

obtaining initial feature information of a second pixel, wherein the first pixel and the second pixel are points in different images in the to-be-processed data packet, and the first pixel and the second pixel have same semantics; and

performing fusion on initial feature information of the first pixel and the initial feature information of the second pixel to obtain feature information of the first pixel.

12. The method according to claim 11, wherein the first model is obtained through training based on a training sample and a first loss term, a plurality of images in the training sample comprise images of a first scene at a plurality of angles of view, the plurality of images in the training sample comprise a first image and a second image, the first loss term indicates a similarity between first feature information and second feature information, the first feature information comprises feature information of a first point in the first image, the second feature information comprises feature information of a second point in the second image, and the first point in the first image and the second point in the second image correspond to a same point in the first scene.

13. A model training apparatus, wherein the model training apparatus comprises:

an obtaining module, configured to obtain a training sample, wherein a plurality of images in the training sample comprise images of a first scene at a plurality of angles of view;
a processing module, configured to input the training sample to a first model, and perform feature extraction by using the first model to obtain feature information of each image in the training sample; and
a training module, configured to train the first model based on the feature information of each image in the training sample and a first loss term, wherein
the plurality of images comprise a first image and a second image, an objective of training by using the first loss term comprises increasing a similarity between first feature information and second feature information, the first feature information comprises feature information of a first point in the first image, the second feature information comprises feature information of a second point in the second image, and the first point in the first image and the second point in the second image correspond to a same point in the first scene.

14. The apparatus according to claim 13, wherein the training module is specifically configured to train the first model based on the feature information of each image in the training sample, the first loss term, and a second loss term, wherein an objective of training by using the second loss term comprises reducing a similarity between the first feature information and third feature information, the third feature information comprises feature information of a third point in the second image, and the third point is different from the second point.

15. The apparatus according to claim 14, wherein both the second point and the third point are located on a first line, a second line is projected to the second image to obtain the first line, the second line passes through the first point, and the second line further passes through a focus of a camera that captures the first image and/or an origin of a camera coordinate system corresponding to the first image.

16. The apparatus according to any one of claims 13 to 15, wherein the feature information of each image in the training sample comprises updated feature information of a plurality of first pixels of each image in the training sample; and the processing module is specifically configured to obtain initial feature information of a second pixel, and perform fusion on initial feature information of the first pixel and the initial feature information of the second pixel to obtain updated feature information of the first pixel, wherein the first pixel and the second pixel are points in different images among the plurality of images, and the first pixel and the second pixel have same semantics.

17. The apparatus according to claim 16, wherein the first pixel is comprised in a third image in the training sample, and the processing module comprises:

an obtaining submodule, configured to obtain at least one third point on a third line, wherein the third line passes through the first pixel, and the third line further passes through a focus of a camera that captures the third image and/or an origin of an image coordinate system corresponding to the third image, wherein
the obtaining submodule is further configured to obtain a feature information set, wherein the feature information set comprises initial feature information of each of a plurality of projected-to points, the projected-to point is a point obtained by projecting the third point to a fourth image, the fourth image is an image in the training sample other than the third image, and the plurality of projected-to points comprise the second pixel; and
a fusion submodule, configured to perform fusion on the initial feature information of the first pixel and the feature information set.

18. The apparatus according to any one of claims 13 to 15, wherein the training sample further comprises a new angle of view, and the processing module is further configured to perform feature processing based on the feature information of each image in the training sample by using the first model to obtain a predicted image of the first scene at the new angle of view; and
the training module is specifically configured to train the first model based on the feature information of each image in the training sample, the predicted image, the first loss term, and a third loss term, wherein the third loss term indicates a similarity between the predicted image and an expected image of the first scene at the new angle of view.

19. The apparatus according to claim 18, wherein the predicted image comprises first color values of a plurality of pixels, and the processing module comprises:

a processing submodule, configured to perform feature processing by using the first model to obtain information that is generated by the first model and that corresponds to a third pixel, wherein the third pixel is any one of the plurality of pixels, and the information corresponding to the third pixel comprises a plurality of second color values and a voxel density corresponding to each second color value;

a normalization submodule, configured to normalize the voxel density corresponding to each second color value to obtain a weight of each second color value; and

a weighted summation submodule, configured to perform weighted summation on the plurality of second color values based on the weight of each second color value to obtain the first color value of the third pixel.

20. An image processing apparatus, wherein the image processing apparatus comprises:

an obtaining module, configured to obtain to-be-processed data, wherein a plurality of images in the to-be-processed data comprise images of a scene at a plurality of angles of view; and

a processing module, configured to input the to-be-processed data to a first model, and perform feature extraction by using the first model to obtain feature information of each image in the to-be-processed data, wherein

the processing module is further configured to perform feature processing based on the feature information of each image in the to-be-processed data by using the first model to obtain a prediction result output by the first model, wherein

the first model is obtained through training based on a training sample and a first loss term, a plurality of images in the training sample comprise images of a first scene at a plurality of angles of view, the plurality of images in the training sample comprise a first image and a second image, the first loss term indicates a similarity between first feature information and second feature information, the first feature information comprises feature information of a first point in the first image, the second feature information comprises feature information of a second point in the second image, and the first point in the first image and the second point in the second image correspond to a same point in the first scene.

21. The apparatus according to claim 20, wherein the first model is obtained through training based on the training sample, the first loss term, and a second loss term, an objective of training by using the second loss term comprises reducing a similarity between the first feature information and third feature information, the third feature information comprises feature information of a first pixel in the second image, and the first pixel is different from the second point.

22. The apparatus according to claim 20 or 21, wherein the feature information of each image in the to-be-processed data comprises feature information of a plurality of first pixels of each image in the to-be-processed data; and

the processing module is specifically configured to obtain initial feature information of a second pixel, and perform fusion on initial feature information of the first pixel and the initial feature information of the second pixel to obtain feature information of the first pixel, wherein the first pixel and the second pixel are points in different images in the to-be-processed data packet, and the first pixel and the second pixel have same semantics.

23. An image processing apparatus, wherein the apparatus comprises:

an obtaining module, configured to obtain to-be-processed data, wherein a plurality of images in the to-be-processed data comprise images of a scene at a plurality of angles of view; and

a processing module, configured to input the to-be-processed data to a first model, and perform feature extraction by using the first model to obtain feature information of each image in the to-be-processed data, wherein

the processing module is further configured to perform feature processing based on the feature information of each image in the to-be-processed data by using the first model to obtain a prediction result output by the first model, wherein

the feature information of each image in the to-be-processed data comprises feature information of a plurality of first pixels of each image in the to-be-processed data; and

the processing module is specifically configured to obtain initial feature information of a second pixel, and perform fusion on initial feature information of the first pixel and the initial feature information of the second pixel to obtain feature information of the first pixel, wherein the first pixel and the second pixel are points in different images in the to-be-processed data packet, and the first pixel and the second pixel have same semantics.

24. The apparatus according to claim 23, wherein the first model is obtained through training based on a training sample and a first loss term, a plurality of images in the training sample comprise images of a first scene at a plurality of angles of view, the plurality of images in the training sample comprise a first image and a second image, the first loss term indicates a similarity between first feature information and second feature information, the first feature information comprises feature information of a first point in the first image, the second feature information comprises feature information of a second point in the second image, and the first point in the first image and the second point in the second image correspond to a same point in the first scene.

25. A computer program product, wherein the computer program product comprises a program, and when the program is run on a computer, the computer is enabled to perform the method according to any one of claims 1 to 12.

26. A computer-readable storage medium, wherein the computer-readable storage medium stores a program, and when the program is run on a computer, the computer is enabled to perform the method according to any one of claims 1 to 12.

27. An execution device, comprising a processor and a memory, wherein the processor is coupled to the memory, wherein

the memory is configured to store a program; and
the processor is configured to execute the program in the memory, to enable the execution device to perform the method according to any one of claims 8 to 12.

28. A training device, comprising a processor and a memory, wherein the processor is coupled to the memory, wherein

the memory is configured to store a program; and
the processor is configured to execute the program in the memory, to enable the training device to perform the method according to any one of claims 1 to 7.

Intelligent information chain

Intelligent products and industry application

| Translation/Text analysis/... | Speech/Vision/ Image/... |

| Data | Data processing: | Data training/ Machine learning/ Deep learning | Search/Inference/ Decision-making | ... |

| Infrastructure | Sensor | Intelligent chip | Infrastructure platform | ... |

IT value chain

FIG. 1a

FIG. 1b

Database 220 → Training device 210    200

Execution device 230

First machine learning model/ rule 201

Client device 250

Computing module 231

Data storage system 240

**FIG. 2**

| | |
|---|---|
| Obtain a training sample, where a plurality of images in the training sample include images of a first scene at a plurality of angles of view | 301 |

| | |
|---|---|
| Input the training sample to a first model, and perform feature extraction by using the first model to obtain feature information of each image in the training sample | 302 |

| | |
|---|---|
| Train the first model based on the feature information of each image in the training sample and a first loss term, where the plurality of images include a first image and a second image, an objective of training by using the first loss term includes increasing a similarity between first feature information and second feature information, the first feature information includes feature information of a first point in the first image, the second feature information includes feature information of a second point in the second image, and the first point in the first image and the second point in the second image correspond to a same point in the first scene | 303 |

**FIG. 3**

First point

Second point

FIG. 4

Obtain a training sample, where a plurality of images in the training sample include images of a first scene at a plurality of angles of view ⟋ 501

Input the training sample to a first model, and perform feature extraction by using the first model to obtain feature information of each image in the training sample ⟋ 502

Perform feature processing based on the feature information of each image in the training sample by using the first model to obtain a prediction result output by the first model ⟋ 503

Train the first model based on the feature information of each image in the training sample and a first loss term, where an objective of training by using the first loss term includes increasing a similarity between first feature information and second feature information, the first feature information includes feature information of a first point in the first image, the second feature information includes feature information of a second point in the second image, and the first point in the first image and the second point in the second image correspond to a same point in the first scene ⟋ 504

FIG. 5

(a)

(b)

Projected-to points

(c)

Projected-to points

FIG. 6

FIG. 7

FIG. 8

FIG. 9

First value

Calculate a distance

Calculate a similarity

Feature information of a second point

Feature information of four third points

Feature information of a first point

Second image

First image

FIG. 10

| Obtain to-be-processed data, where a plurality of images in the to-be-processed data include images of a scene at a plurality of angles of view | 1101 |

↓

| Input the to-be-processed data to a first model, and perform feature extraction by using the first model to obtain feature information of each image in the to-be-processed data | 1102 |

↓

| Perform feature processing based on the feature information of each image in the to-be-processed data by using the first model to obtain a prediction result output by the first model | 1103 |

FIG. 11

1200

**Model training apparatus**

| Obtaining module 1201 | Processing module 1202 | Training module 1203 |

FIG. 12

1300

**Image processing apparatus**

| Obtaining module 1301 | Processing module 1302 |

FIG. 13

1400

Image processing apparatus

Obtaining module 1401 ●——● Processing module 1402

FIG. 14

1500

Execution device

Antenna

Antenna

Receiver 1501

Transmitter 1502

Processor 1503

Memory 1504

Application processor 15031

Communication processor 15032

FIG. 15

1600

Training device

1622 — Central processing unit

Power supply — 1626

Operating system — 1641

Data — 1644

Application — 1642

Storage medium — 1630

Memory — 1632

Wired or wireless network interface — 1650

Input/Output interface — 1658

FIG. 16

| Host CPU | | Weight memory 1702 |
|---|---|---|

Input memory 1701

Operation circuit 1703

Vector computing unit 1707

Accumulator 1708

Direct memory access controller 1705

Unified memory 1706

Controller 1704

Instruction fetch buffer 1709

External memory

Bus interface unit 1710

Neural-network processing unit 170

FIG. 17

## INTERNATIONAL SEARCH REPORT

| | International application No. |
|---|---|
| | **PCT/CN2024/078728** |

**A. CLASSIFICATION OF SUBJECT MATTER**

G06V10/77(2022.01)i; G06V10/774(2022.01)i; G06V10/80(2022.01)i; G06V10/764(2022.01)i

According to International Patent Classification (IPC) or to both national classification and IPC

**B. FIELDS SEARCHED**

Minimum documentation searched (classification system followed by classification symbols)

IPC:G06V10/-

Documentation searched other than minimum documentation to the extent that such documents are included in the fields searched

Electronic data base consulted during the international search (name of data base and, where practicable, search terms used)

CNTXT: CNABS; CJFD; ENTXTC; ENTXT; VEN; IEEE; CNKI: 多视角, 跨视角, 惩罚, 损失, 同一, 相同, 语义, 位置, 目标, 对象, 类间, 类内, 融合, 特征, 相似度, 预测, multi-view, loss, same, semantic, location, object, interclass, intraclass, fusion, feature, similarity, predict.

**C. DOCUMENTS CONSIDERED TO BE RELEVANT**

| Category* | Citation of document, with indication, where appropriate, of the relevant passages | Relevant to claim No. |
|---|---|---|
| PX | CN 116824284 A (HUAWEI TECHNOLOGIES CO., LTD.) 29 September 2023 (2023-09-29) claims 1-28 | 1-28 |
| X | CN 115147453 A (ALIBABA SINGAPORE HOLDING PRIVATE LIMITED) 04 October 2022 (2022-10-04) description, paragraphs [0050]-[0108] | 1, 8, 13, 20, 25-28 |
| Y | CN 115147453 A (ALIBABA SINGAPORE HOLDING PRIVATE LIMITED) 04 October 2022 (2022-10-04) description, paragraphs [0050]-[0108] | 2-7, 9-10, 12, 14-19, 21-22, 24 |
| Y | CN 111179440 A (HARBIN INSTITUTE OF TECHNOLOGY) 19 May 2020 (2020-05-19) description, paragraphs [0051]-[0077] | 2-3, 9, 14-15, 21 |
| X | CN 114863007 A (CHINA TELECOM CORPORATION LIMITED) 05 August 2022 (2022-08-05) description, paragraphs [0005]-[0038] | 11, 23, 25-27 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 April 2024** | **29 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/078728** |

| C. DOCUMENTS CONSIDERED TO BE RELEVANT | | |
| --- | --- | --- |
| Category* | Citation of document, with indication, where appropriate, of the relevant passages | Relevant to claim No. |
| Y | CN 114863007 A (CHINA TELECOM CORPORATION LIMITED) 05 August 2022 (2022-08-05) description, paragraphs [0005]-[0038] | 4-7, 10, 12, 16-19, 22, 24 |
| A | CN 115147452 A (ALIBABA SINGAPORE HOLDING PRIVATE LIMITED) 04 October 2022 (2022-10-04) entire document | 1-28 |
| A | US 2020192389 A1 (THE BOEING COMPANY) 18 June 2020 (2020-06-18) entire document | 1-28 |

**INTERNATIONAL SEARCH REPORT**
**Information on patent family members**

| International application No. |
| --- |
| **PCT/CN2024/078728** |

| Patent document cited in search report | | | Publication date (day/month/year) | Patent family member(s) | | | Publication date (day/month/year) |
| --- | --- | --- | --- | --- | --- | --- | --- |
| CN | 116824284 | A | 29 September 2023 | None | | | |
| CN | 115147453 | A | 04 October 2022 | None | | | |
| CN | 111179440 | A | 19 May 2020 | CN | 111179440 | B | 14 April 2023 |
| CN | 114863007 | A | 05 August 2022 | None | | | |
| CN | 115147452 | A | 04 October 2022 | None | | | |
| US | 2020192389 | A1 | 18 June 2020 | US | 11092966 | B2 | 17 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310216763